# EUROPEAN PATENT APPLICATION

(11) **EP 4 727 133 A1**
(43) Date of publication of application: **15.04.2026**
(21) Application number: 24823399.1
(22) Date of filing: 12.06.2024
(51) Int. Cl.: H04N 19/597, G06T 9/00, H04N 21/2365

(54) **DECODING DEVICE, DECODING METHOD, AND ENCODING DEVICE**

(30) Priority: 12.06.2023 US 202363472386 P
(71) Applicant: Panasonic Intellectual Property Corporation of America, Torrance, CA 90504 (US)
(72) Inventor: IGUCHI, Noritaka, Kadoma-shi, Osaka 571-0057 (JP); SUGIO, Toshiyasu, Kadoma-shi, Osaka 571-0057 (JP); NISHI, Takahiro, Kadoma-shi, Osaka 571-0057 (JP)
(74) Representative: Grünecker Patent- und Rechtsanwälte PartG mbB
(86) International application number: PCT/JP2024/021291
(87) International publication number: WO 2024/257784

(57) **Abstract**

A decoding device (1130) includes: circuitry (1131); and memory (1132) coupled to the circuitry (1131). The circuitry (1131), in operation, performs: obtaining encoded data that includes (i) encoding scheme information indicating one of encoding schemes that include first data representing a three-dimensional object and second data representing the three-dimensional object and (ii) identification information indicating a three-dimensional space including the three-dimensional object; decoding, based on the encoded data, the first data and the second data; generating first presentation data for presentation, by rendering the first data; generating second presentation data for presentation, by rendering the second data; and presenting including switching from a presentation of the second presentation data generated to a presentation of the first presentation data.

## Description

### [Technical Field]

The present disclosure relates to a decoding device, a decoding method, and an encoding device.

### [Background Art]

Devices or services utilizing three-dimensional data are expected to find their widespread use in a wide range of fields, such as computer vision that enables autonomous operations of cars or robots, map information, monitoring, infrastructure inspection, and video distribution. Three-dimensional data is obtained through various means including a distance sensor such as a rangefinder, as well as a stereo camera and a combination of a plurality of monocular cameras.

Methods of representing three-dimensional data include a method known as a point cloud scheme that represents the shape of a three-dimensional structure by a point cloud in a three-dimensional space. In the point cloud scheme, the positions and colors of a point cloud are stored. While point cloud is expected to be a mainstream method of representing three-dimensional data, a massive amount of data of a point cloud necessitates compression of the amount of three-dimensional data by encoding for accumulation and transmission, as in the case of a two-dimensional moving picture (examples include Moving Picture Experts Group-4 Advanced Video Coding (MPEG-4 AVC) and High Efficiency Video Coding (HEVC) standardized by MPEG).

Meanwhile, point cloud compression is partially supported by, for example, an open-source library (Point Cloud Library) for point cloud-related processing.

Furthermore, a technique for searching for and displaying a facility located in the surroundings of the vehicle by using three-dimensional map data is known (see, for example, Patent Literature (PTL) 1).

### [Citation List]

### [Patent Literature]

[PTL 1] International Publication WO 2014/020663

### [Summary of Invention]

### [Technical Problem]

The present disclosure has as an object to provide a decoding device, and the like, capable of appropriately presenting first presentation data and second presentation data that are based on first data and second data.

### [Solution to Problem]

A decoding device according to an aspect of the present disclosure includes: circuitry; and memory coupled to the circuitry. The circuitry, in operation, performs: obtaining encoded data that includes (i) encoding scheme information indicating one of encoding schemes that include first data representing a three-dimensional object and second data representing the three-dimensional object and (ii) identification information indicating a three-dimensional space including the three-dimensional object; decoding, based on the encoded data, the first data and the second data that correspond to the three-dimensional space; generating first presentation data for presentation, by rendering the first data; generating second presentation data for presentation, by rendering the second data; and presenting including switching from a presentation of the second presentation data generated to a presentation of the first presentation data.

A decoding device according to an aspect of the present disclosure is a decoding device that decodes first data representing a three-dimensional object. The decoding device includes: circuitry; and memory coupled to the circuitry. The circuitry, in operation, performs: decoding encoding scheme information indicating a second encoding scheme that represents the three-dimensional object and is different from a first encoding scheme of the first data; and decoding second data of the second encoding scheme indicated by the encoding scheme information. The second data is to be used for generating second presentation data for presentation.

An encoding device according to a sixteenth aspect of the present disclosure is an encoding device that encodes first data representing a three-dimensional object. The encoding device includes: circuitry; and memory coupled to the circuitry. The circuitry, in operation, performs: generating encoding scheme information indicating a second encoding scheme that represents the three-dimensional object and is different from a first encoding scheme of the first data; generating second data of the second encoding scheme indicated by the encoding scheme information; and generating a bitstream including the encoding scheme information and the second data. The second data is to be used for generating second presentation data for presentation.

It is to be noted that these general or specific aspects may be implemented as a system, a method, an integrated circuit, a computer program, or a computer-readable recording medium such as a CD-ROM, or may be implemented as any combination of a system, a method, an integrated circuit, a computer program, and a recording medium.

### [Advantageous Effects of Invention]

A decoding device, and the like, according to the present disclosure is capable of appropriately presenting first presentation data and second presentation data that are based on first data and second data.

### [Brief Description of Drawings]

[FIG. 1]

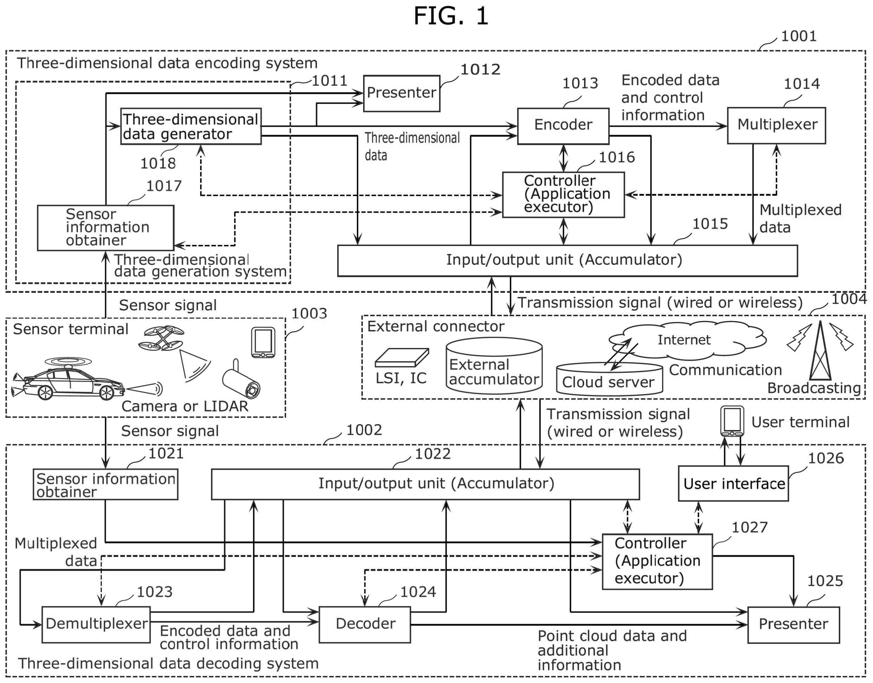

   FIG. 1 is a diagram illustrating a configuration example of a three-dimensional data encoding and decoding system according to an embodiment.
[FIG. 2]

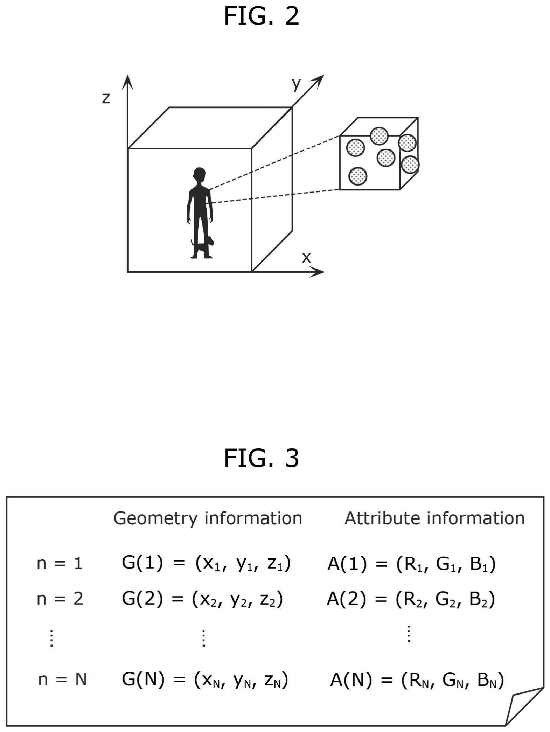

   FIG. 2 is a diagram illustrating an example of point cloud data.
[FIG. 3]
   FIG. 3 is a diagram illustrating a configuration example of a data file describing information of the point cloud data.
[FIG. 4]

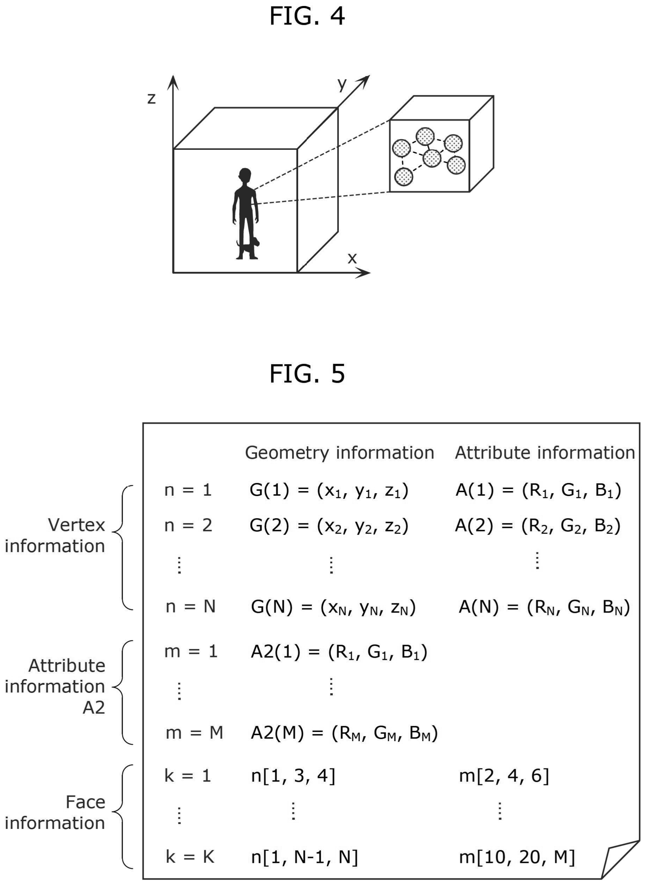

   FIG. 4 is a diagram illustrating the configuration of three-dimensional mesh data.
[FIG. 5]
   FIG. 5 is a diagram illustrating a configuration example of a data file describing information of the three-dimensional mesh data.
[FIG. 6]

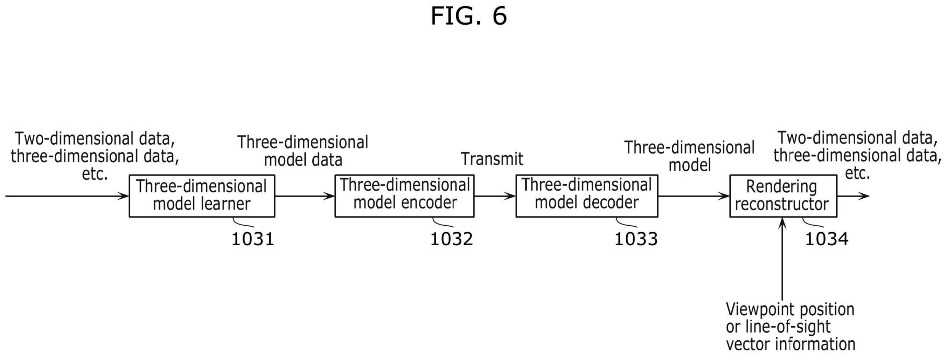

   FIG. 6 is a diagram for describing a three-dimensional model.
[FIG. 7]

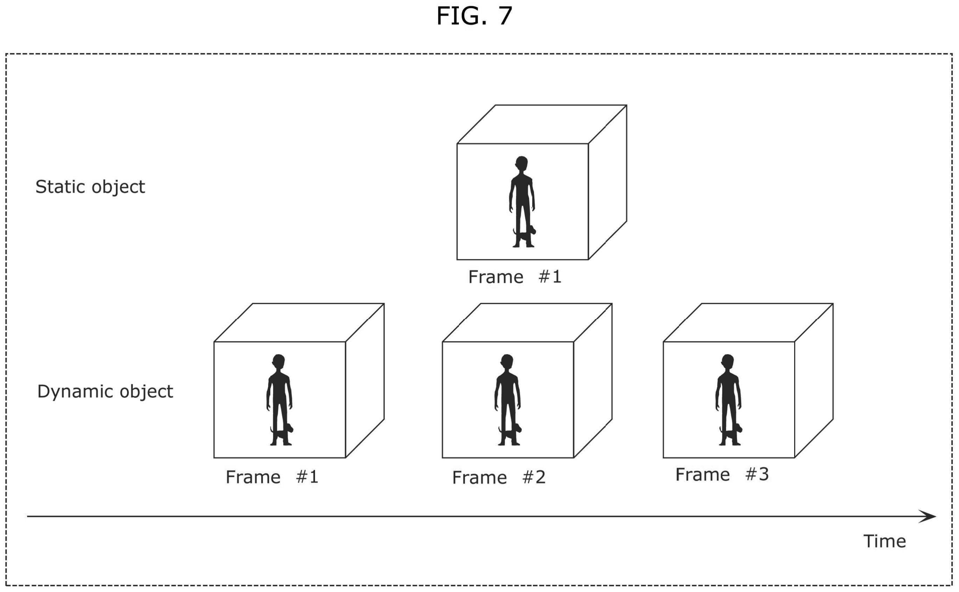

   FIG. 7 is a diagram illustrating types of three-dimensional data.
[FIG. 8]

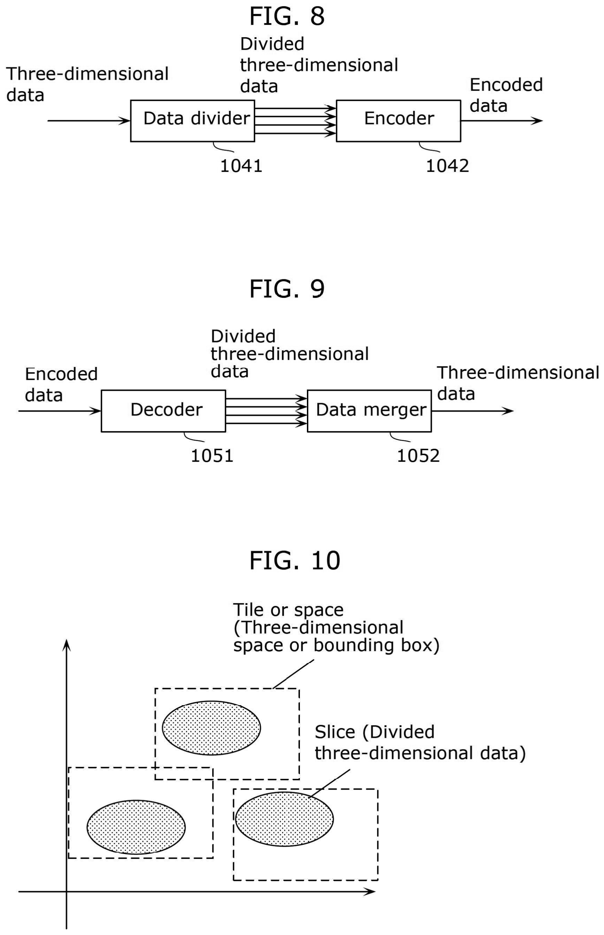

   FIG. 8 is a diagram for describing encoding processing of three-dimensional data.
[FIG. 9]
   FIG. 9 is a diagram for describing decoding processing of three-dimensional data.
[FIG. 10]
   FIG. 10 is a diagram two-dimensionally and schematically illustrating tiles and slices of three-dimensional data.
[FIG. 11]

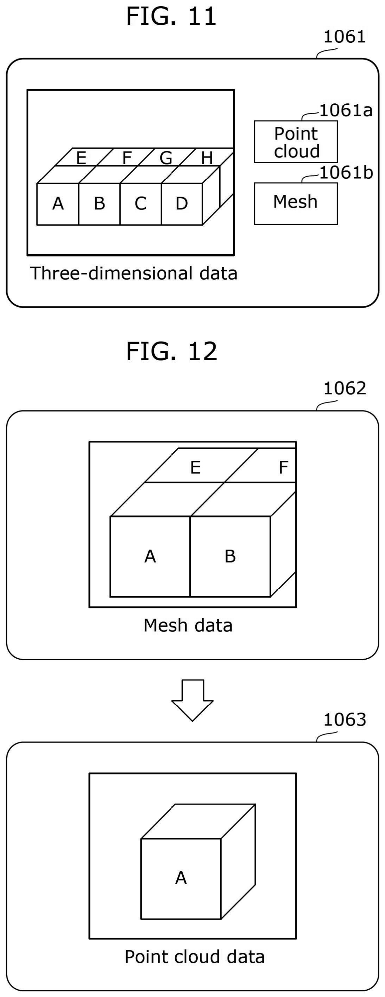

   FIG. 11 is a diagram illustrating an example of a terminal presentation screen that is switchable according to a request of a user.
[FIG. 12]
   FIG. 12 is a diagram illustrating an example of terminal presentation screens that are automatically switchable according to an operation by the user.
[FIG. 13]

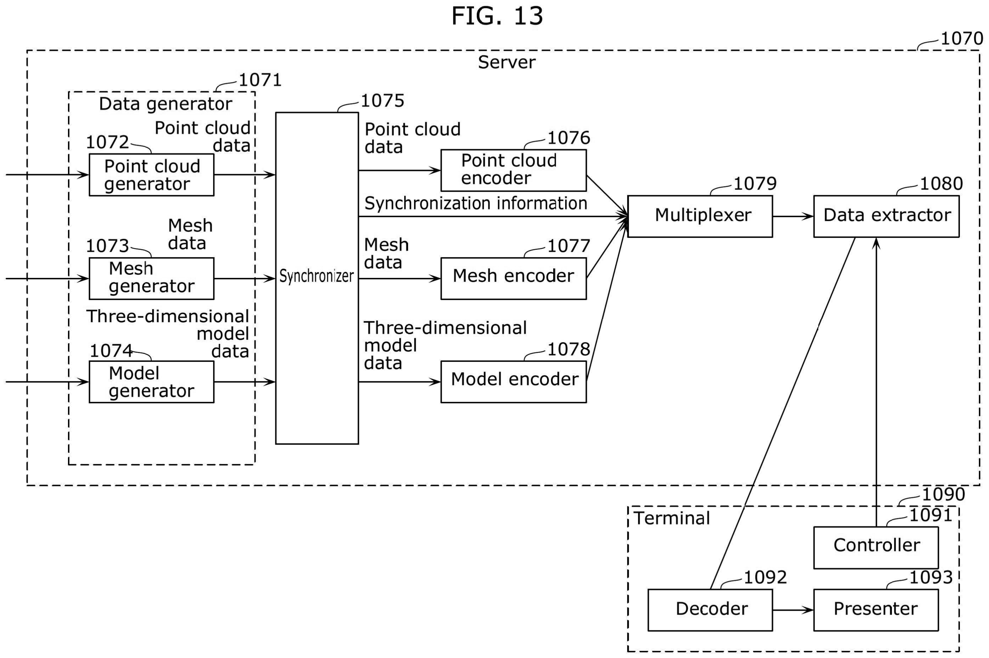

   FIG. 13 is a block diagram illustrating an example of the functional configuration of a server and a terminal.
[FIG. 14]

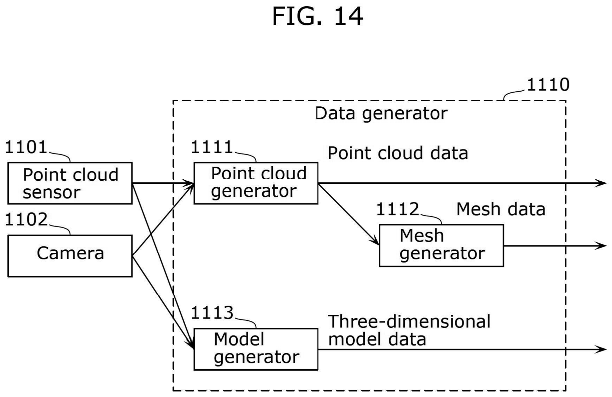

   FIG. 14 is a block diagram illustrating another example of a data generator of a server.
[FIG. 15]

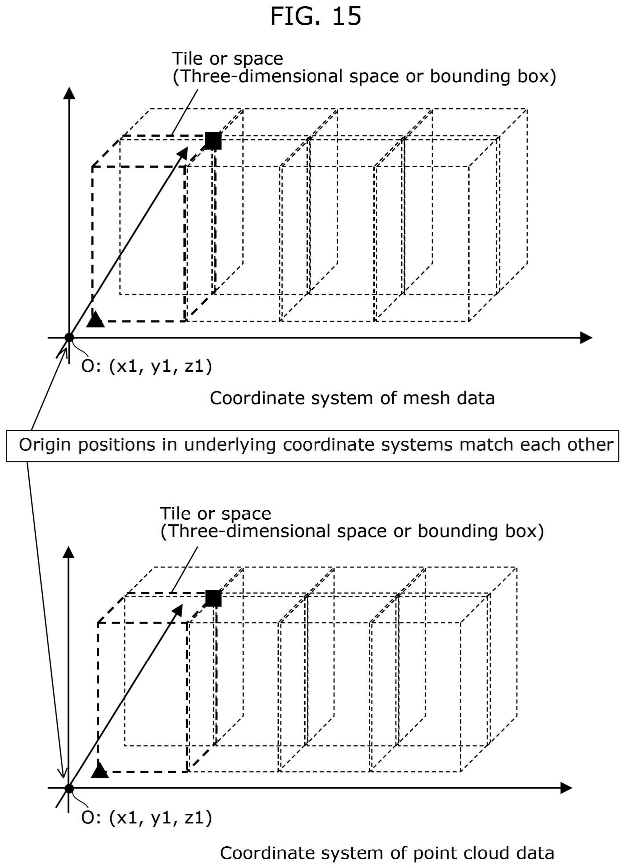

   FIG. 15 is a diagram for describing synchronization processing of coordinate systems.
[FIG. 16]

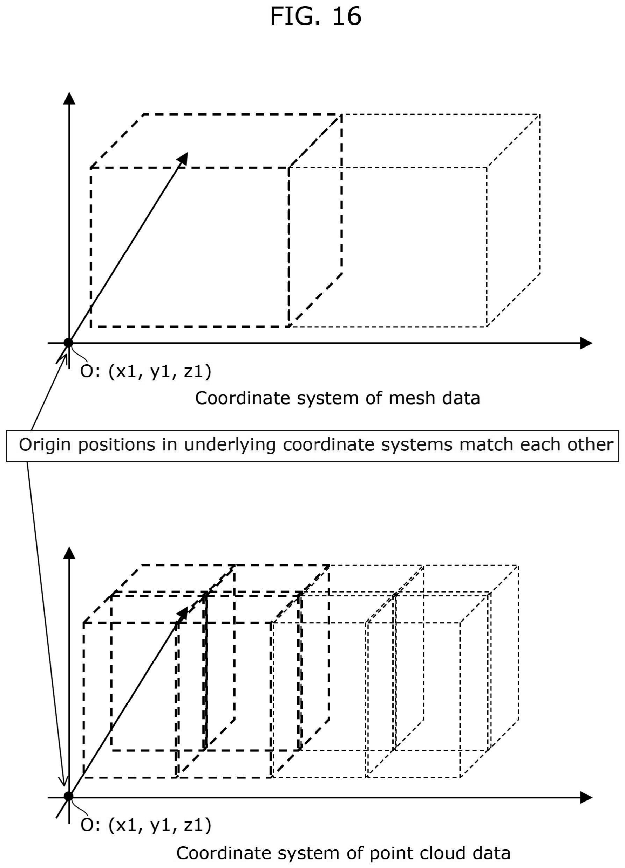

   FIG. 16 is a diagram for describing synchronization processing of coordinate systems.
[FIG. 17]

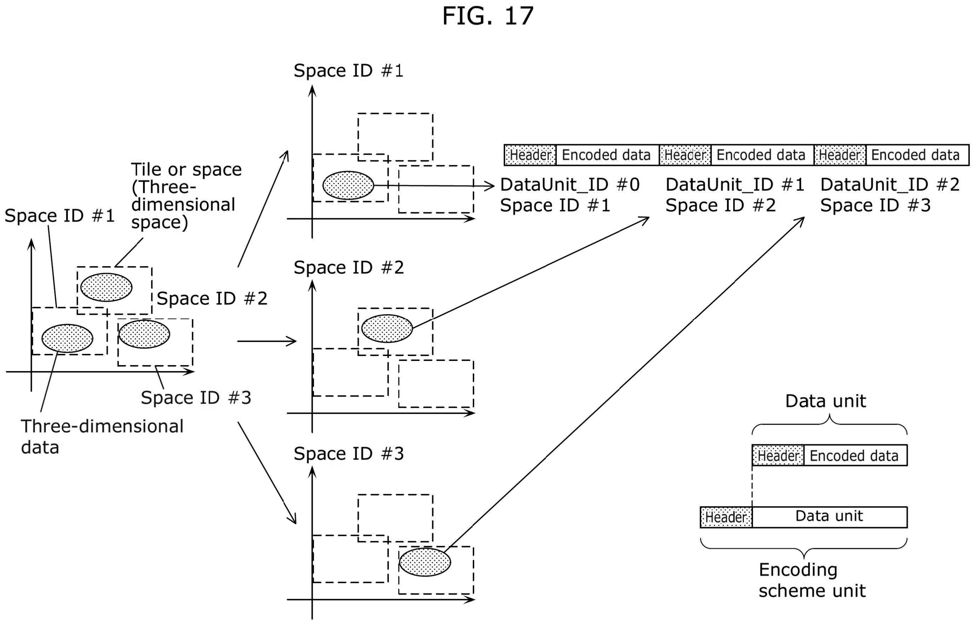

   FIG. 17 is a diagram for describing the relationship between a three-dimensional space and encoded data.
[FIG. 18]

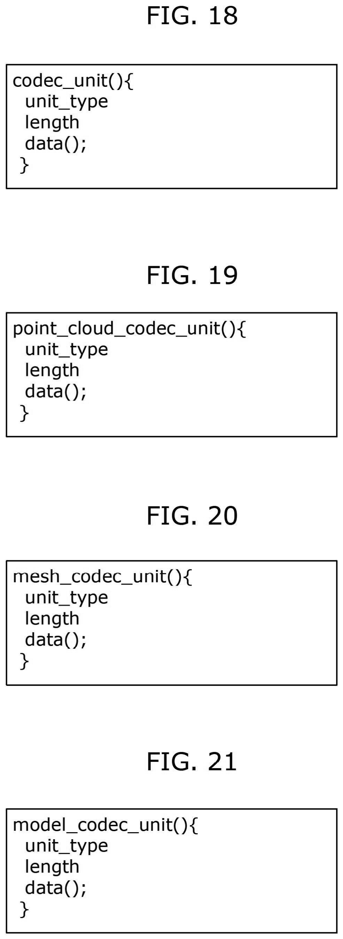

   FIG. 18 is a diagram illustrating an example of syntax of an encoding scheme unit.
[FIG. 19]
   FIG. 19 is a diagram illustrating an example of syntax of an encoded point cloud.
[FIG. 20]
   FIG. 20 is a diagram illustrating an example of syntax of an encoded mesh.
[FIG. 21]
   FIG. 21 is a diagram illustrating an example of syntax of an encoded three-dimensional model.
[FIG. 22]

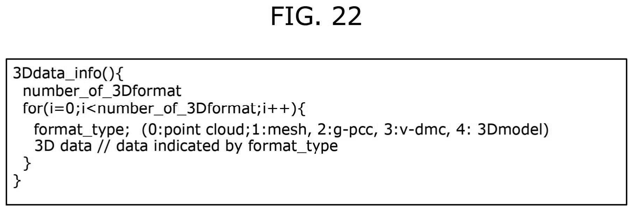

   FIG. 22 is a diagram illustrating an example of syntax of three-dimensional data information.
[FIG. 23]

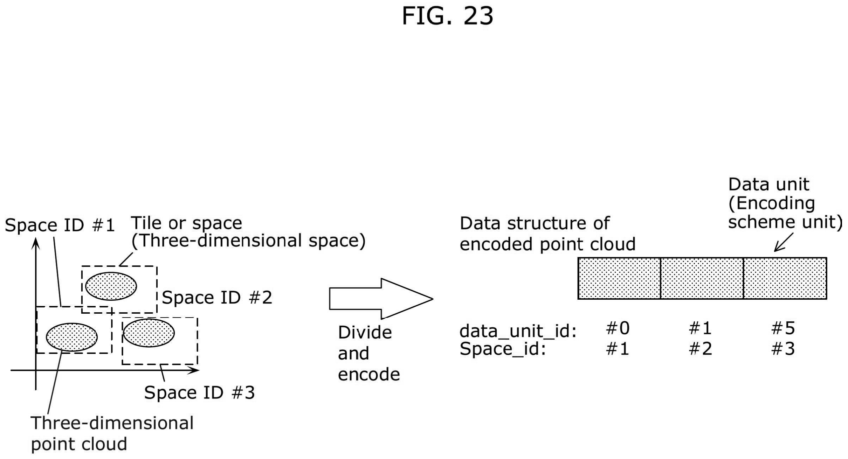

   FIG. 23 is a diagram for describing the data structure of an encoded point cloud.
[FIG. 24]

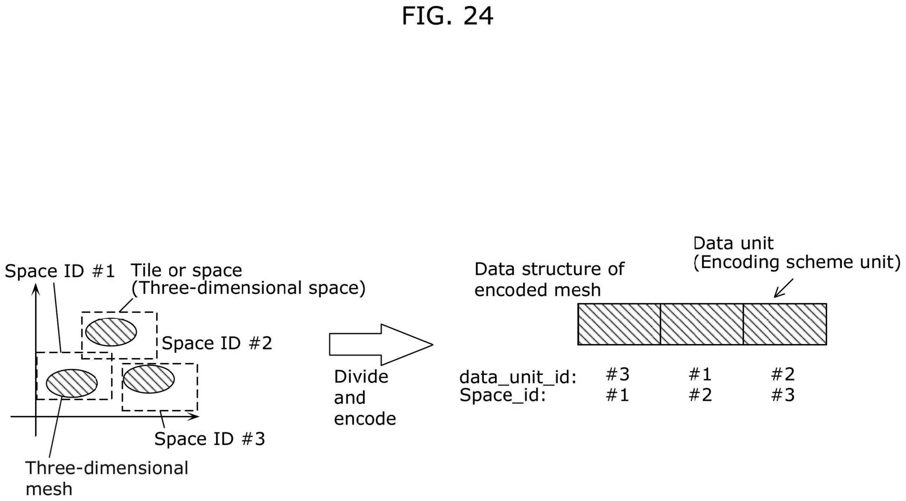

   FIG. 24 is a diagram for describing the data structure of an encoded mesh.
[FIG. 25]

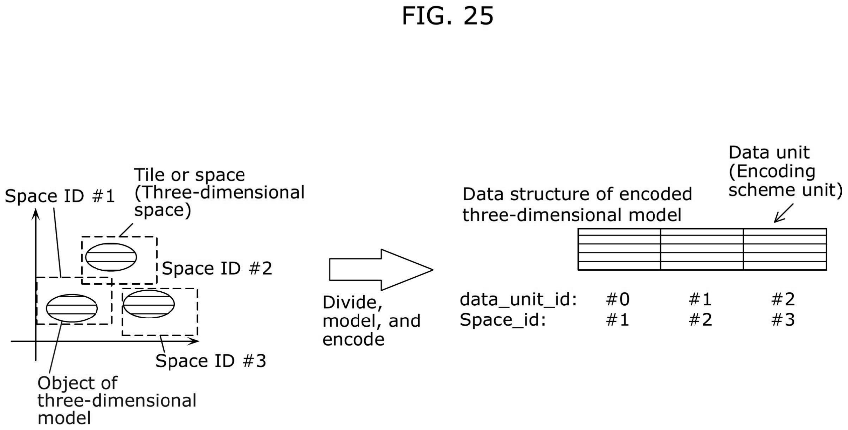

   FIG. 25 is a diagram for describing the data structure of an encoded three-dimensional model.
[FIG. 26]

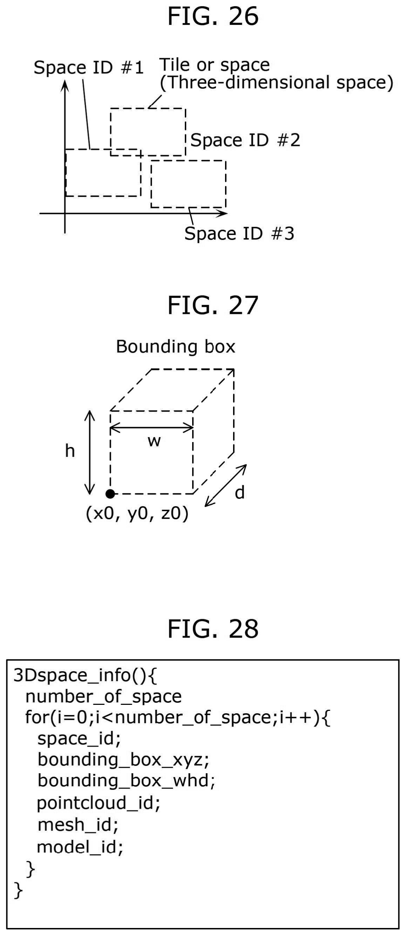

   FIG. 26 is a diagram two-dimensionally illustrating an example of a plurality of three-dimensional spaces.
[FIG. 27]
   FIG. 27 is a diagram illustrating an example of a bounding box.
[FIG. 28]
   FIG. 28 is a diagram illustrating an example of syntax of three-dimensional space information.
[FIG. 29]

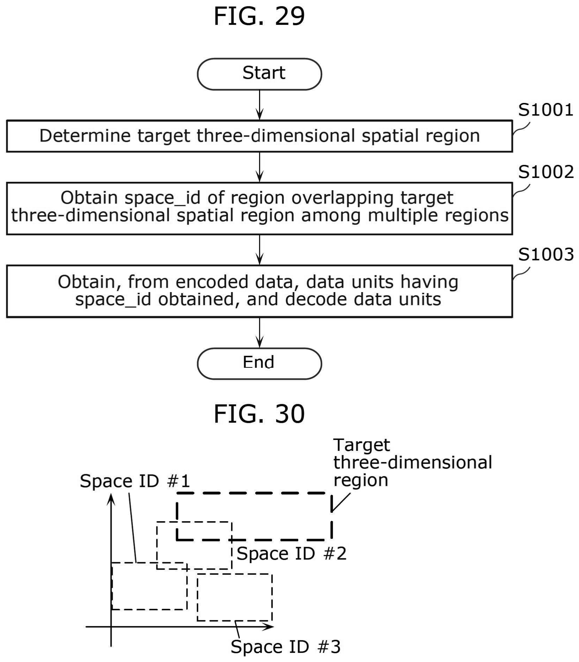

   FIG. 29 is a flowchart illustrating an example of partial decoding.
[FIG.30]
   FIG. 30 is a diagram illustrating an example of a three-dimensional spatial region that is to be the target of partial decoding.
[FIG. 31]

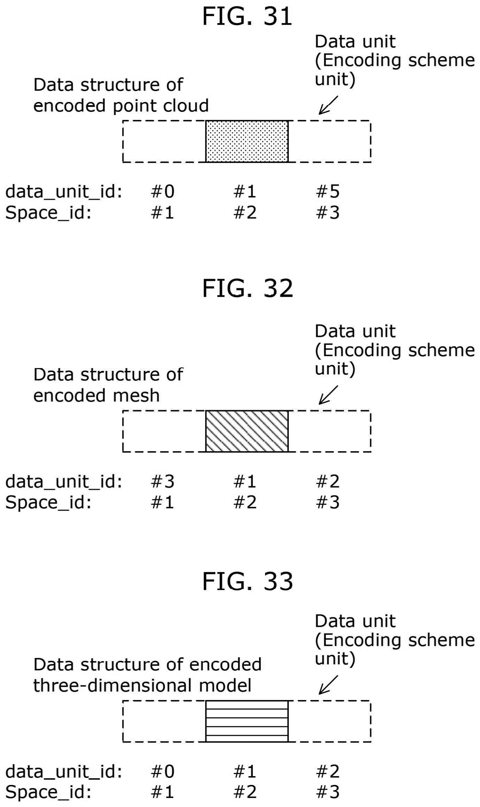

   FIG. 31 is a diagram illustrating an example of the data structure of an encoded point cloud that is to undergo partial decoding.
[FIG. 32]
   FIG. 32 is a diagram illustrating an example of the data structure of an encoded mesh that is to undergo partial decoding.
[FIG. 33]
   FIG. 33 is a diagram illustrating an example of the data structure of an encoded three-dimensional model that is to undergo partial decoding.
[FIG. 34]

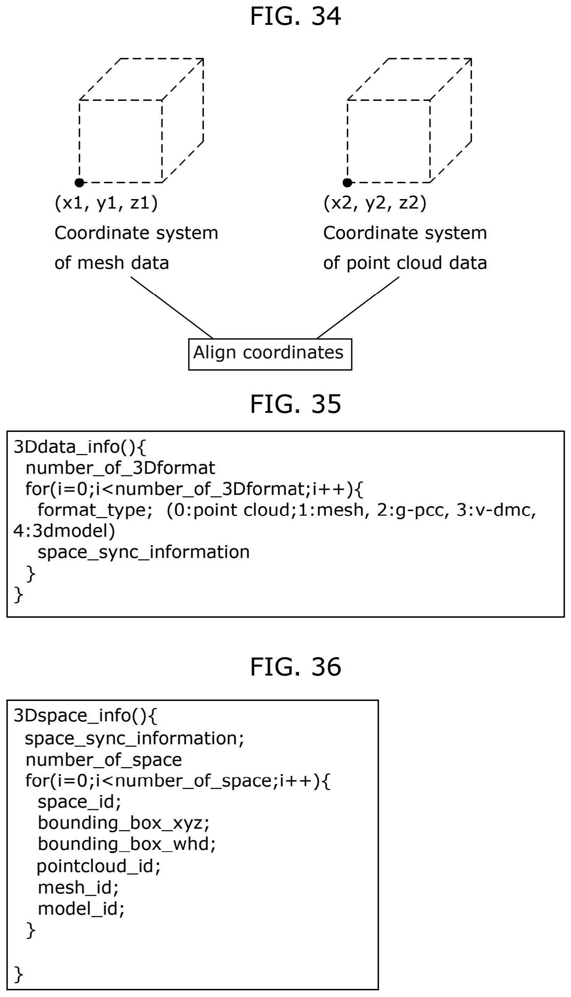

   FIG. 34 is a diagram illustrating an example of coordinate systems of different types of three-dimensional data that are not spatially synchronized.
[FIG. 35]
   FIG. 35 is a diagram illustrating an example of syntax of three-dimensional data information.
[FIG. 36]
   FIG. 36 is a diagram illustrating an example of syntax of three-dimensional space information.
[FIG. 37]

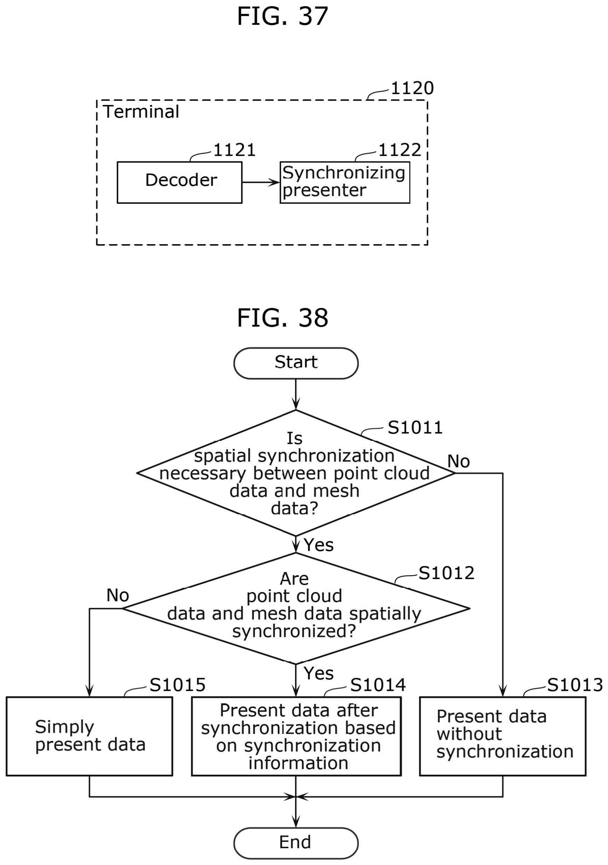

   FIG. 37 is a diagram illustrating an example of the functional configuration of the terminal.
[FIG. 38]
   FIG. 38 is a flowchart illustrating an example of spatial synchronization processing.
[FIG. 39]

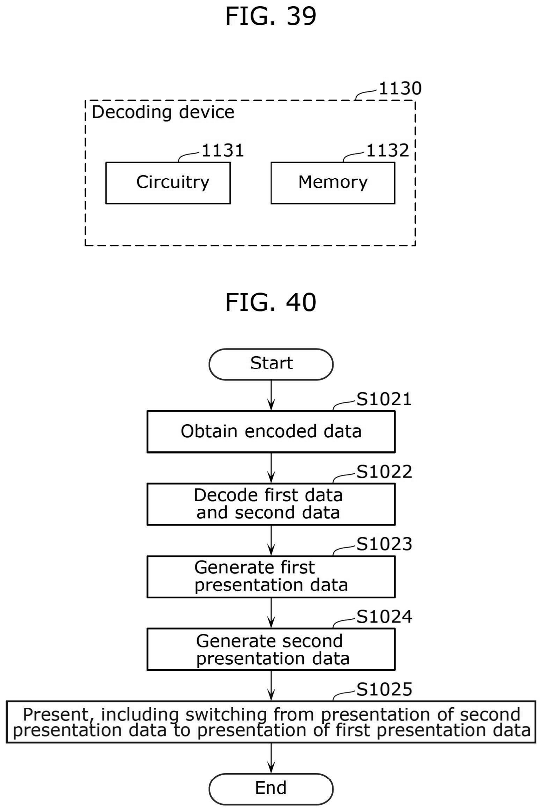

   FIG. 39 is a diagram illustrating an example of the configuration of a decoding device.
[FIG. 40]
   FIG. 40 is a flowchart illustrating an example of a decoding method performed by the decoding device.
[FIG. 41]

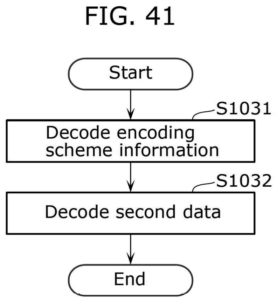

   FIG. 41 is a flowchart illustrating another example of a decoding method performed by the decoding device.
[FIG. 42]

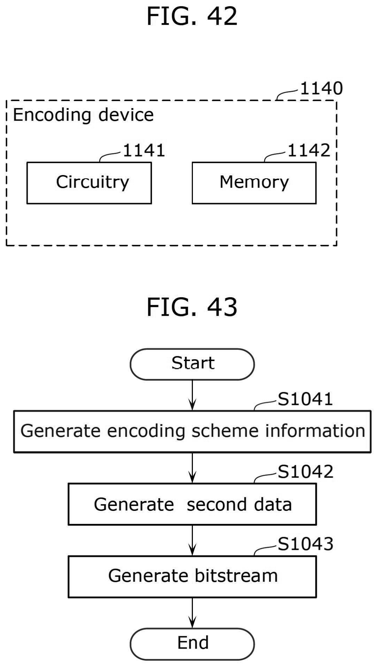

   FIG. 42 is a diagram illustrating an example of the configuration of an encoding device.
[FIG. 43]
   FIG. 43 is a flowchart illustrating an example of an encoding method performed by the encoding device.

### [Description of Embodiments]

A decoding device according to a first aspect of the present disclosure includes: circuitry; and memory coupled to the circuitry. The circuitry, in operation, performs: obtaining encoded data that includes (i) encoding scheme information indicating one of encoding schemes that include first data representing a three-dimensional object and second data representing the three-dimensional object and (ii) identification information indicating a three-dimensional space including the three-dimensional object; decoding, based on the encoded data, the first data and the second data that correspond to the three-dimensional space; generating first presentation data for presentation, by rendering the first data; generating second presentation data for presentation, by rendering the second data; and presenting including switching from a presentation of the second presentation data generated to a presentation of the first presentation data.

Accordingly, first presentation data and second presentation data are generated based on first data and second data that correspond to the three-dimensional space, and presenting including switching from a presentation of the second presentation data to a presentation of the first presentation data is performed, and thus, in the switching between two data representing the three-dimensional object, the two data can be switched and presented without causing spatial deviation. Therefore, the first presentation data and the second presentation data can be appropriately presented.

A decoding device according to a second aspect of the present disclosure is the decoding device according to the first aspect, in which, the first data is point cloud data representing the three-dimensional object.

For this reason, presenting including switching from the presentation of the second presentation data to the presentation of the first presentation data that is based on point cloud data is performed, and thus, in the switching between the two data representing the three-dimensional object, the two data can be switched and presented without causing spatial deviation.

A decoding device according to a third aspect of the present disclosure is the decoding device according to the first aspect or the second aspect, in which, the second data is mesh data representing the three-dimensional object.

For this reason, presenting including switching from the presentation of the second presentation data that is based on the mesh data to the presentation of the first presentation data is performed, and thus, in the switching between the two data representing the three-dimensional object, the two data can be switched and presented without causing spatial deviation.

A decoding device according to a fourth aspect of the present disclosure is the decoding device according to the first aspect or the second aspect, in which, the second data is three-dimensional model data representing the three-dimensional object, and the three-dimensional model data indicates a machine learning model obtainable through machine learning of sets of (i) lines of sight and (ii) two-dimensional images.

For this reason, presenting including switching from the presentation of the second presentation data that is based on the three-dimensional model data to the presentation of the first presentation data is performed, and thus, in the switching between the two data representing the three-dimensional object, the two data can be switched and presented without causing spatial deviation.

A decoding device according to a fifth aspect of the present disclosure is the decoding device according to the first aspect or the second aspect, in which, the second data is a two-dimensional image of the three-dimensional object when viewed from a predetermined line-of-sight direction.

For this reason, presenting including switching from the presentation of the second presentation data that is based on the two-dimensional image to the presentation of the first presentation data is performed, and thus, in the switching between the two data representing the three-dimensional object, the two data can be switched and presented without causing spatial deviation.

A decoding device according to a sixth aspect of the present disclosure is the decoding device according to any one of the first to fifth aspects, in which, the circuitry further performs: obtaining, from a user, a switching request for switching presentation data, and, in the presenting, the circuitry performs the presenting including the switching from the presentation of the second presentation data to the presentation of the first presentation data, according to the switching request.

For this reason, switching can be performed at the timing specified by the user.

A decoding device according to a seventh aspect of the present disclosure is the decoding device according to any one of the first to fifth aspects, in which, the circuitry further performs: receiving, from a user, an operation for changing a mode of presentation, and, in the presenting, the circuitry changes the mode of presentation according to the operation, and performs the presenting including the switching from the presentation of the second presentation data to the presentation of the first presentation data, according to the change.

For this reason, switching can be performed at a timing that is in accordance with the operation by the user.

A decoding device according to an eighth aspect of the present disclosure is the decoding device according to any one of the first to fifth aspects, in which, in the obtaining, the circuitry obtains the encoded data from an encoding device via a communication network, and, in the presenting, the circuitry performs the presenting including the switching from the presentation of the second presentation data to the presentation of the first presentation data, according to a bandwidth of the communication network.

For this reason, switching can be performed according to the bandwidth of the communication network, and thus, the presenting including switching from a presentation of the second presentation data generated to a presentation of the first presentation data can be performed when the bandwidth of the communication network changes from being lower than a predetermined bandwidth to being higher than or equal to the predetermined band, for example.

A decoding device according to a ninth aspect of the present disclosure is the decoding device according to any one of the first to fifth aspects, in which, in the presenting, the circuitry performs the presenting including the switching from the presentation of the second presentation data to the presentation of the first presentation data, according to an available capacity of the circuitry.

For this reason, switching can be performed according to the available capacity of the circuitry, and thus, the presenting including switching from a presentation of the second presentation data generated to a presentation of the first presentation data can be performed when the available capacity of the circuitry changes from being lower than a predetermined capacity to being higher than or equal to the predetermined capacity, for example.

A decoding device according to a tenth aspect of the present disclosure is the decoding device according to any one of the first to ninth aspects, in which, the encoded data includes synchronization information for synchronizing a coordinate system of the first data and a coordinate system of the second data, and, in the presenting, the circuitry presents the first presentation data and the second presentation data, based on the synchronization information.

For this reason, the switching from the presentation of the second presentation data to the presentation of the first presentation data can be performed after synchronizing the coordinate systems of the first presentation data and the second presentation data. For this reason, in the switching between the two data representing the three-dimensional object, the two data can be switched and presented without causing spatial deviation.

A decoding device according to an eleventh aspect of the present disclosure is the decoding device according to the tenth aspect, in which, the circuitry further performs: determining whether a coordinate system of the first data and a coordinate system of the second data are to be synchronized, and, in the presenting, the circuitry presents the first presentation data and the second presentation data, based on the synchronization information, when the circuitry determines that the coordinate system of the first data and the coordinate system of the second data are to be synchronized.

For this reason, synchronization processing can be performed when required, and synchronization processing can be skipped when not required. Therefore, there is a possibility that the processing load can be reduced.

A decoding device according to a twelfth aspect of the present disclosure is the decoding device according to any one of the first to eleventh aspects, in which, each of the first data and the second data has a configuration that is common between the first data and the second data.

For this reason, the data amount of encoded data can be reduced. Therefore, communication capacity can be reduced.

A decoding device according to a thirteenth aspect of the present disclosure is the decoding device according to any one of the first to twelfth aspects, in which, the encoded data includes space information for identifying the three-dimensional space in which the three-dimensional object is included. The circuitry further performs: obtaining a target region indicating one region of the three-dimensional space; and identifying, based on the space information, first overlapping data that is part of the first data and overlaps the target region. In the decoding, the circuitry decodes the first overlapping data identified.

For this reason, the volume of data to be obtained can be reduced by obtaining only the first overlapping data, for example. Therefore, communication capacity can be reduced. Furthermore, for example, it is possible to decode only the first overlapping data. Therefore, the processing load can be reduced.

A decoding method according to a fourteenth aspect of the present disclosure includes: obtaining encoded data that includes (i) encoding scheme information indicating one of encoding schemes that include first data representing a three-dimensional object and second data representing the three-dimensional object and (ii) identification information indicating a three-dimensional space including the three-dimensional object; decoding, based on the encoded data, the first data and the second data; generating first presentation data for presentation, by rendering the first data; generating second presentation data for presentation, by rendering the second data; and presenting including switching from a presentation of the second presentation data generated to a presentation of the first presentation data.

Accordingly, first presentation data and second presentation data are generated based on first data and second data that correspond to the three-dimensional space, and presenting including switching from a presentation of the second presentation data to a presentation of the first presentation data is performed, and thus, the switching and presenting can be performed without causing spatial deviation. Therefore, the first presentation data and the second presentation data can be appropriately presented.

A decoding device according to a fifteenth aspect of the present disclosure is a decoding device that decodes first data representing a three-dimensional object. The decoding device includes: circuitry; and memory coupled to the circuitry. The circuitry, in operation, performs: decoding encoding scheme information indicating a second encoding scheme that represents the three-dimensional object and is different from a first encoding scheme of the first data; and decoding second data of the second encoding scheme indicated by the encoding scheme information. The second data is to be used for generating second presentation data for presentation.

Accordingly, since second data of a second encoding scheme indicated by the encoding scheme information obtained by decoding is decoded, it is possible to obtain second data for generating the appropriate second presentation data for presentation.

An encoding device according to a sixteenth aspect of the present disclosure is an encoding device that encodes first data representing a three-dimensional object. The encoding device includes: circuitry; and memory coupled to the circuitry. The circuitry, in operation, performs: generating encoding scheme information indicating a second encoding scheme that represents the three-dimensional object and is different from a first encoding scheme of the first data; generating second data of the second encoding scheme indicated by the encoding scheme information; and generating a bitstream including the encoding scheme information and the second data. The second data is to be used for generating second presentation data for presentation.

Accordingly, since a bitstream including encoding scheme information and second data is generated, a decoding device that obtains the bitstream can obtain second data for generating the appropriate second presentation data for presentation.

It is to be noted that these general or specific aspects may be implemented as a system, a method, an integrated circuit, a computer program, or a computer-readable recording medium such as a CD-ROM, or may be implemented as any combination of a system, a method, an integrated circuit, a computer program, and a recording medium.

Hereinafter, embodiments will be specifically described with reference to the drawings. It is to be noted that each of the following embodiments indicate a specific example of the present disclosure. The numerical values, shapes, materials, constituent elements, the arrangement and connection of the constituent elements, steps, the processing order of the steps, etc., indicated in the following embodiments are mere examples, and thus are not intended to limit the present disclosure. Among the constituent elements described in the following embodiments, constituent elements not recited in any one of the independent claims will be described as optional constituent elements.

### [EMBODIMENT]

A configuration of a three-dimensional data encoding and decoding system according to this embodiment will be described. FIG. 1 is a diagram illustrating a configuration example of the three-dimensional data encoding and decoding system according to this embodiment. As shown in FIG. 1, the three-dimensional data encoding and decoding system includes three-dimensional data encoding system 1001, three-dimensional data decoding system 1002, sensor terminal 1003, and external connector 1004.

Three-dimensional data encoding system 1001 generates encoded data or multiplexed data by encoding three-dimensional data. Three-dimensional data encoding system 1001 may be a three-dimensional data encoding device implemented by a single device or a system implemented by a plurality of devices. The three-dimensional data encoding device may include a part of a plurality of processors included in three-dimensional data encoding system 1001.

Three-dimensional data encoding system 1001 includes three-dimensional data generation system 1011, presenter 1012, encoder 1013, multiplexer 1014, input/output unit 1015, and controller 1016. Three-dimensional data generation system 1011 includes sensor information obtainer 1017, and three-dimensional data generator 1018.

Sensor information obtainer 1017 obtains a sensor signal from sensor terminal 1003, and outputs the sensor signal to three-dimensional data generator 1018. Three-dimensional data generator 1018 generates three-dimensional data from the sensor signal, and outputs the three-dimensional data to encoder 1013.

Presenter 1012 presents the sensor signal or three-dimensional data to a user. For example, presenter 1012 displays information or an image based on the sensor signal or three-dimensional data.

Encoder 1013 encodes (compresses) the three-dimensional data, and outputs the resulting encoded data, control information obtained in the course of the encoding, and other additional information to multiplexer 1014. The additional information includes the sensor signal, for example.

Multiplexer 1014 generates multiplexed data by multiplexing the encoded data, the control information, and the additional information input thereto from encoder 1013. A format of the multiplexed data is a file format for accumulation or a packet format for transmission, for example.

Input/output unit 1015 (a communication unit or interface, for example) outputs the multiplexed data to the outside. Alternatively, the multiplexed data may be accumulated in an accumulator, such as an internal memory. Controller 1016 (or an application executor) controls each processor. That is, controller 1016 controls the encoding, the multiplexing, or other processing. Controller 1016 may control demultiplexing, decoding, or presentation.

Note that the sensor signal may be input to encoder 1013 or multiplexer 1014. Alternatively, input/output unit 1015 may output the three-dimensional data or encoded data to the outside as it is.

A transmission signal (multiplexed data) output from three-dimensional data encoding system 1001 is input to three-dimensional data decoding system 1002 via external connector 1004.

Three-dimensional data decoding system 1002 generates three-dimensional data, by decoding the encoded data or multiplexed data. Note that three-dimensional data decoding system 1002 may be a three-dimensional data decoding device implemented by a single device or a system implemented by a plurality of devices. The three-dimensional data decoding device may include a part of a plurality of processors included in three-dimensional data decoding system 1002.

Three-dimensional data decoding system 1002 includes sensor information obtainer 1021, input/output unit 1022, demultiplexer 1023, decoder 1024, presenter 1025, user interface 1026, and controller 1027.

Sensor information obtainer 1021 obtains a sensor signal from sensor terminal 1003.

Input/output unit 1022 obtains the transmission signal, decodes the transmission signal into the multiplexed data (file format or packet), and outputs the multiplexed data to demultiplexer 1023.

Demultiplexer 1023 obtains the encoded data, the control information, and the additional information from the multiplexed data, and outputs the encoded data, the control information, and the additional information to decoder 1024.

Decoder 1024 reconstructs point cloud data by decoding the encoded data.

Presenter 1025 presents the point cloud data to a user. For example, presenter 1025 displays information or an image based on the point cloud data. User interface 1026 obtains an indication based on a manipulation by the user. Controller 1027 (or an application executor) controls each processor. That is, controller 1027 controls the demultiplexing, the decoding, the presentation, or other processing.

Note that input/output unit 1022 may obtain the point cloud data or encoded data as it is from the outside. Presenter 1025 may obtain additional information, such as a sensor signal, and present information based on the additional information. Presenter 1025 may perform a presentation based on an instruction from a user obtained on user interface 1026.

Sensor terminal 1003 generates a sensor signal, which is information obtained by a sensor. Sensor terminal 1003 is a terminal provided with a sensor or a camera. For example, sensor terminal 1003 is a mobile body such as an automobile, a flying object such as an aircraft, a mobile terminal, or a camera.

Sensor signals that can be obtained by sensor terminal 1003 includes a signal indicating (1) the distance between sensor terminal 1003 and an object or the reflectance of the object obtained by LiDAR, a millimeter wave radar, or an infrared sensor or (2) the distance between a camera and an object or the reflectance of the object obtained by a plurality of monocular camera images or a stereo-camera image, for example. The sensor signal may include the posture, orientation, gyro (angular velocity), position (GPS information or altitude), velocity, or acceleration of the sensor, for example. The sensor signal may include air temperature, air pressure, air humidity, or magnetism, for example.

External connector 1004 is implemented by an integrated circuit (LSI or IC), an external accumulator, communication with a cloud server via the Internet, or broadcasting, for example.

Next, point cloud data will be described. FIG. 2 is a diagram illustrating a configuration of point cloud data. FIG. 3 is a diagram illustrating a configuration example of a data file describing information of the point cloud data.

Point cloud data includes data on a plurality of points. Data on each point includes geometry information (three-dimensional coordinates) and attribute information associated with the geometry information. A set of a plurality of such points is referred to as a point cloud. For example, a point cloud indicates a three-dimensional shape of an object.

Geometry information (position), such as three-dimensional coordinates, may be referred to as geometry. Data on each point may include attribute information (attribute) on a plurality of types of attributes. A type of attribute is color or reflectance, for example.

One item of attribute information may be associated with one item of geometry information, or attribute information on a plurality of different types of attributes may be associated with one item of geometry information. Furthermore, items of attribute information on the same type of attribute may be associated with one item of geometry information.

The configuration example of a data file illustrated in FIG. 3 is an example in which geometry information and attribute information are associated with each other in a one-to-one relationship, and geometry information and attribute information on N points forming point cloud data are shown.

The geometry information is information on three axes, specifically, an x-axis, a y-axis, and a z-axis, for example. The attribute information is RGB color information, for example. A representative data file is ply file, for example.

Next, three-dimensional mesh data will be described. FIG. 4 is a diagram illustrating the configuration of three-dimensional mesh data. FIG. 5 is a diagram illustrating a configuration example of a data file describing information of the three-dimensional mesh data.

Three-dimensional mesh data is in a data format used in computer graphics (CG) to represent the three-dimensional shape of an object as a collection of face information items. Each face information item represents a polygon such as a triangle or a quadrangle. Three-dimensional mesh data is also referred to as polygons or a polygon mesh.

Three-dimensional mesh data is composed of a set of the following elements: a three-dimensional point cloud; vertexes, which are three-dimensional points in the three-dimensional point cloud; edges, each connecting two vertexes at three-dimensional points; and faces surrounded by edges. The three-dimensional point cloud is a set of points that include geometry information in a three-dimensional space and attribute information corresponding to the geometry information. It should be noted that a three-dimensional point may be referred to simply as a point.

A vertex may have attribute information, such as color information, reflectance, and normal vector, related to the corresponding three-dimensional point. The relationship between vertexes that form an edge or a face may be represented by information called connectivity. It should be noted that a vertex may be referred to as a position. Which side of a face is the outer side may be represented by the direction of the normal vector with respect to three-dimensional points. Furthermore, a vertex may have attribute information related to the corresponding faces.

An exemplary form of mesh data file is an object file. A mesh data file as shown in FIG. 5 indicates vertex information, including geometry information G (1) to G (N) of N vertexes that constitute a mesh, and attribute information A (1) to A (N) of the vertexes. In a mesh data file, vertex information does not necessarily need to include attribute information.

In addition, attribute information does not necessarily need to be in one-to-one correspondence with vertexes. The mesh data file in FIG. 5 illustrates an example of three-dimensional mesh data having M attribute information items A2.

Face information is represented as combinations of vertex indexes; n [1, 3, 4] indicates a triangular face formed by three vertexes with n = 1, n = 3, and n = 4.

Furthermore, m [2, 4, 6] indicates that attribute information items with m = 2, m = 4, and m = 6 in attribute information A2 correspond to the three vertexes, respectively. It should be noted that, although the example here illustrates three-vertex faces, the number of vertexes forming each face is not limited to three and may be any integer not smaller than three. For example, quadrangular faces involve four vertexes, and polygonal faces involve vertexes as many as the vertexes of the polygon.

Furthermore, attribute information A2 may be specified in a file separate from the mesh data file, and may include pointer information pointing to that file. For example, the attribute information may be stored in a two-dimensional attribute map file, and attribute information A2 in the mesh data file may indicate the name of the attribute map file and two-dimensional coordinates in the attribute map. Thus, attribute information A2 may be included in the mesh data file or may be specified in a file separate from the mesh data file. In either way, the attribute information of three-dimensional points can be specified.

Next, the three-dimensional model will be described. FIG. 6 is a diagram for describing a three-dimensional model.

A three-dimensional model is a model generated based on two-dimensional data or three-dimensional data.

Three-dimensional model learner 1031 generates a three-dimensional model. The three-dimensional model is, for example, a network model generated by learning two-dimensional data (two-dimensional images) or three-dimensional data (a point cloud or a mesh) and then using a technique such as neural network to learn a three-dimensional shape and attribute information corresponding to the three-dimensional shape.

Three-dimensional model learner 1031 may generate the three-dimensional model through learning with neural radiance fields (NeRF) based on two-dimensional images. Three-dimensional model learner 1031 may generate the three-dimensional model after performing photogrammetry on two-dimensional images to convert the two-dimensional images into three-dimensional data. The three-dimensional model may also be generated using three-dimensional data obtained by a sensor (distance sensor).

Three-dimensional model data, which constitutes the three-dimensional model, includes information indicating a network model structure, feature values, and other information. For example, the three-dimensional model data includes information on neural network components. The information on the components includes, for example, layers such as the input layer, intermediate layers, and the output layer, nodes in each layer, weighting factors for the nodes, and transformation functions for the nodes.

Three-dimensional model encoder 1032 may encode the three-dimensional model data and transmit the encoded three-dimensional model data.

Three-dimensional model decoder 1033 receives the transmitted encoded three-dimensional model data and decodes the encoded three-dimensional model data into the three-dimensional model.

Rendering reconstructor 1034 reconstructs (generates) two-dimensional data (a two-dimensional image) or three-dimensional data (a point cloud or a mesh) based on the decoded three-dimensional model. For example, for a NeRF-modeled three-dimensional model, rendering reconstructor 1034 obtains viewpoint position or line-of-sight vector information, generates rendered two-dimensional data (a two-dimensional image) based on the three-dimensional model and on the viewpoint position or the line-of-sight vector, and outputs the two-dimensional data. The generated two-dimensional data represents a two-dimensional image of a three-dimensional object viewed from the viewpoint position or viewed along the line of sight indicated by the line-of-sight vector. The three-dimensional object corresponds to the subject captured as the two- or three-dimensional data input to three-dimensional model learner 1031.

Next, types of three-dimensional data will be described. FIG. 7 is a diagram illustrating types of three-dimensional data. As illustrated in FIG. 7, three-dimensional data includes a static object and a dynamic object.

The static object is three-dimensional data at an arbitrary time (a time point). The dynamic object is three-dimensional data that varies with time. In the following, point cloud data associated with a time point will be referred to as a PCC frame or a frame. Furthermore, mesh data at an arbitrary time is referred to as a mesh frame or a frame.

The object may be a three-dimensional data whose range is limited to some extent, such as ordinary video data, or may be three-dimensional data whose range is not limited, such as map information.

There are points that have varying densities. There may be sparse point cloud data (sparse mesh data) and dense point cloud data (dense mesh data).

Hereinafter, each processing unit will be described in detail. Sensor information is obtained by various means, including a distance sensor such as LiDAR or a range finder, a stereo camera, or a combination of a plurality of monocular cameras. Three-dimensional data generator 1018 generates three-dimensional data based on the sensor information obtained by sensor information obtainer 1017. Three-dimensional data generator 1018 generates position information (geometry information) as point cloud data, and adds attribute information associated with the geometry information to the geometry information.

When generating geometry information or adding attribute information, three-dimensional data generator 1018 may process the point cloud data. For example, three-dimensional data generator 1018 may reduce the data amount by omitting a point cloud whose position coincides with the position of another point cloud. Three-dimensional data generator 1018 may also convert the geometry information (such as shifting, rotating, or normalizing the position) or may generate mesh data by processing the point cloud data. Furthermore, three-dimensional data generator 1018 may render the attribute information.

Note that, although FIG. 1 illustrates three-dimensional data generation system 1011 as being included in three-dimensional data encoding system 1001, three-dimensional data generation system 1011 may be independently provided outside three-dimensional data encoding system 1001.

Encoder 1013 generates encoded data by encoding three-dimensional data according to an encoding method previously defined. Encoding method includes G-PCC (an encoding method using geometry information), V-PCC (an encoding method using a video codec), Draco (a mesh encoding method), and V-DMC (a mesh encoding method). The encoding method is not limited to these methods, and may be a method for encoding a dynamic mesh or another method obtained by combining these methods, for example.

Decoder 1024 decodes the encoded data into the three-dimensional data using the encoding method previously defined.

Multiplexer 1014 generates multiplexed data by multiplexing the encoded data in an existing multiplexing method. The generated multiplexed data is transmitted or accumulated. Multiplexer 1014 multiplexes not only the encoded data of three-dimensional data but also another medium, such as a video, an audio, subtitles, an application, or a file, or reference time information. Multiplexer 1014 may further multiplex attribute information associated with sensor information or point cloud data.

Multiplexing schemes or file formats include ISOBMFF, MPEG-DASH, which is a transmission scheme based on ISOBMFF, MMT, MPEG-2 TS Systems, or RTP, for example.

Demultiplexer 1023 extracts encoded data of three-dimensional data, other media, time information and the like from the multiplexed data.

Input/output unit 1015 transmits the multiplexed data in a method suitable for the transmission medium or accumulation medium, such as broadcasting or communication. Input/output unit 1015 may communicate with another device over the Internet or communicate with an accumulator, such as a cloud server.

As a communication protocol, http, ftp, TCP, UDP or the like is used. The pull communication scheme or the push communication scheme can be used.

A wired transmission or a wireless transmission can be used. For the wired transmission, Ethernet (registered trademark), USB, RS-232C, HDMI (registered trademark), or a coaxial cable is used, for example. For the wireless transmission, wireless LAN, Wi-Fi (registered trademark), Bluetooth (registered trademark), or a millimeter wave is used, for example.

As a broadcasting scheme, DVB-T2, DVB-S2, DVB-C2, ATSC3.0, or ISDB-S3 is used, for example.

Next, processing for dividing (classifying) three-dimensional data into one or more three-dimensional data items will be described. FIG. 8 is a diagram for describing encoding processing of three-dimensional data. FIG. 9 is a diagram for describing decoding processing of three-dimensional data.

As shown in FIG. 8, data divider 1041 divides three-dimensional data according to one or more three-dimensional spaces to generate one or more three-dimensional data items resulting from dividing (i.e., one or more divided three-dimensional data items). Encoder 1042 may encode the one or more divided three-dimensional data items to generate encoded data. Data divider 1041 and encoder 1042 may be included in a single encoding device as components of the encoding device, or may be included in separate devices.

Each of the one or more three-dimensional spaces may be referred to as a tile or a space. A three-dimensional space is, for example, a bounding box. Furthermore, the divided three-dimensional data in each three-dimensional space may be referred to as a slice. A slice, which is a divided three-dimensional data item, includes a point cloud, a mesh, or a three-dimensional model, having geometry information (geometry) or attribute information (attribute). The slices are each encoded by encoder 1042 on an element basis and output as encoded data. The encoded data includes multiple encoded slices.

As shown in FIG. 9, in decoding processing, decoder 1051 decodes the encoded data into the one or more divided three-dimensional data items (one or more slices). Data merger 1052 merges the one or more divided three-dimensional data items to reconstruct (generate) the three-dimensional data. Decoder 1051 and data merger 1052 may be included in a single decoding device as components of the decoding device, or may be included in separate devices. The one or more divided three-dimensional data items decoded by decoder 1051 do not necessarily need to be merged. Decoder 1051 may decode a portion of the one or more divided three-dimensional data items based on a portion of the encoded data and output the decoded portion of the divided three-dimensional data items. In that case, the decoding device need not include data merger 1052.

FIG. 10 is a diagram two-dimensionally and schematically illustrating tiles and slices of three-dimensional data.

In encoding multiple slices, the encoding device may encode the slices using dependences between the slices or without using the dependences. If the slices are encoded without the use of the dependences, the encoding device can encode each slice independently, reducing the processing time by encoding multiple slices in parallel. Furthermore, if the slices are encoded without the use of the dependences, the decoding device can decode each slice independently, reducing the processing time by decoding multiple slices in parallel. In addition, the decoding device can reduce processing load through partial decoding, in which a portion of the slices are decoded.

If the slices are encoded using the dependences, the encoding device signals identifiers indicating the dependences and encodes the data in the order of dependence, starting from data depended on. If the slices are encoded using the dependences, the decoding device decodes the data in the order of dependence, starting from data depended on, based on the identifiers.

The three-dimensional data may be divided into any number of data items in any dividing method. The three-dimensional data may be divided by determining the shapes of objects and dividing the three-dimensional points on an object basis. Alternatively, the three-dimensional data may be divided based on the number of three-dimensional points allowed in each slice. That is, the upper limit may be set for the number of three-dimensional points per slice. Alternatively, the three-dimensional data may be divided by determining whether each three-dimensional point is included in any three-dimensional space (tile information) using map information or geometry information. Tile shapes may overlap.

Thus, dividing the three-dimensional data into divided three-dimensional data items as above allows adaptive encoding suitable for the content or objects, and allows parallel processing during decoding.

Now, the following describes a method of selecting three-dimensional data to be presented or transmitted from among multiple three-dimensional data items.

A server accumulates multiple three-dimensional data items for the same space. For example, the server accumulates point cloud data and mesh data for the same space. The server is an example of the encoding device. A terminal switches, based on the purpose intended on the terminal, three-dimensional data to be obtained from the server and presents the switched three-dimensional data. For example, the terminal may be capable of three-dimensional data analysis. In that case, the three-dimensional data to be presented on the terminal may be switched according to the purpose, such as analysis or viewing, based on a user operation. The terminal is an example of the decoding device.

Switching the three-dimensional data may involve switching between presenting a point cloud and presenting a mesh as the three-dimensional data. Similarly, switching the three-dimensional data may involve switching between transmitting a point cloud and transmitting a mesh as the three-dimensional data. For example, the terminal may transmit the result of a user's selection to the server, receive (download) three-dimensional data corresponding to the result of selection from the server, and present the received three-dimensional data. The three-dimensional data (a point cloud or a mesh) may be encoded or unencoded in the server. If the three-dimensional data is encoded, the terminal may receive the encoded three-dimensional data from the server, decode the received encoded three-dimensional data into three-dimensional data, and present the decoded three-dimensional data.

FIG. 11 is a diagram illustrating an example of a terminal presentation screen that is switchable according to a request of a user.

As shown in FIG. 11, terminal presentation screen 1061 may be switched according to a user request. The terminal presentation screen includes point cloud button 1061a and mesh button 1061b as user interfaces for receiving user requests. Point cloud button 1061a receives requests to present encoded point clouds (encoded point cloud data). Mesh button 1061b receives requests to present encoded meshes (encoded mesh data). Upon the user's input to point cloud button 1061a, the terminal receives a request to present an encoded point cloud and provides a notification of (transmits) the request to the server, indicating the result of selection of data to be presented. Upon the user's input to mesh button 1061b, the terminal receives a request to present an encoded mesh and provides a notification of (transmits) the request to the server, indicating the result of selection of data to be presented. It should be noted that "present" may also be expressed as "display."

In response to receiving the request indicating the result of selection, the server transmits three-dimensional data corresponding to the result of selection to the terminal. If the received request is a request to present an encoded point cloud, the server transmits the encoded point cloud to the terminal. If the received request is a request to present an encoded mesh, the server transmits the encoded mesh to the terminal.

Meshes have the characteristic of being suitable for presentation because they impose less processing load for presentation. In contrast, point clouds have the characteristic of being suitable for measurement because they provide accurate geometry information of three-dimensional models represented by three-dimensional point clouds. The user can select an appropriate type of three-dimensional data according to the user's need, such as, for example, a mesh for observing a three-dimensional model, or a point cloud for measuring a three-dimensional model. This allows reduced presentation processing or accurate measurement.

FIG. 12 is a diagram illustrating an example of terminal presentation screens that are automatically switchable according to an operation by the user.

The terminal performs processing of enlarging the three-dimensional data in response to receiving a user operation. At magnifications lower than a predetermined magnification, the terminal may present mesh data as illustrated on terminal presentation screen 1062; at magnifications higher than or equal to the predetermined magnification, the terminal may present point cloud data as illustrated on terminal presentation screen 1063. For example, the terminal may initially present mesh data at a magnification lower than a predetermined magnification. The user may then perform an operation of enlarging the presentation to the predetermined magnification. In response, the terminal may download, from the server, point cloud data corresponding to the portion of the three-dimensional data focused on (presented) due to the enlargement, and may decode the downloaded point cloud data for presentation.

The above illustrates an example in which the type of the three-dimensional data to be presented is switched in response to an operation of enlarging or reducing the three-dimensional data. However, the type of the three-dimensional data to be presented may be switched in response to other operations. For example, in response to receiving the user's tap operation on an area of mesh data being presented, the terminal may switch to presenting point cloud data corresponding to the area of the mesh data selected by the tap. The terminal may present the point cloud data superimposed on the mesh data, or may present the point cloud data alone instead of the mesh data (i.e., without presenting the mesh data). The terminal may predict in advance before presentation a portion that will be enlarged to the predetermined magnification, download point cloud data corresponding to the predicted portion, and decode and present the downloaded point cloud data. If the point cloud data and the mesh data have undergone spatial synchronization (coordinate alignment) in advance, the terminal may simply present the downloaded point cloud data without performing spatial synchronization. If the point cloud data and the mesh data have not undergone spatial synchronization, the terminal may present the point cloud data after positionally aligning the point cloud data with the mesh data (or with the coordinate system of the mesh data) based on synchronization information for spatial synchronization. It should be noted that the terminal may present the point cloud data without performing position alignment. It should also be noted that, although the above illustrates an example of spatially synchronizing point cloud data with mesh data, the terminal may spatially synchronize mesh data with point cloud data and present the mesh data.

Thus, the terminal downloads only necessary point cloud data and decodes and presents the downloaded point cloud data. This will reduce data traffic between the server and the terminal, processing load on the terminal, and presentation delay.

Generally, mesh data has a smaller data size whereas point cloud data has a larger data size. That is, for mesh data and point cloud data of the same three-dimensional object, the mesh data is smaller in data size than the point cloud data. The terminal can therefore reduce the initial presentation delay by downloading and presenting mesh data first.

Furthermore, presenting mesh data allows the terminal to reduce the processing load for observation of the three-dimensional model. In addition, simultaneously presenting mesh data and point cloud data allows the terminal to improve visibility to facilitate measurement.

It should be noted that the three-dimensional data to be presented may be switched based on the communication network bandwidth. The terminal may present mesh data when the network speed is lower than a predetermined speed due to a narrow bandwidth, and may present point cloud data when the network speed is higher than or equal to the predetermined speed.

Furthermore, the three-dimensional data to be presented may be switched according to the capabilities of the terminal. For example, the three-dimensional data to be presented may be switched based on the processing performance of the terminal or the CPU usage rate of the terminal. The terminal presenting point cloud data may switch to presenting mesh data if the point cloud data presentation is no longer possible due to insufficient processing performance or CPU resources of the terminal. The terminal presenting mesh data may switch to presenting point cloud data if sufficient processing performance or CPU resources of the terminal are determined to be available still after the mesh data presentation.

Now, other examples of switching the three-dimensional data will be described.

In presenting three-dimensional data used at a construction site, the terminal may switch the type of the three-dimensional data in the following manner. The terminal may present mesh data to show appearance, such as a building exterior or a map, and present point cloud data to show an area that includes a part requiring measurement, such as a distortion, crack, or warp on a building.

In presenting three-dimensional data in space such as a stadium, hall, or factory, the terminal may switch the type of the three-dimensional data in the following manner. The terminal may present mesh data to show appearance, such as the brightness, color tone, or atmosphere of lighting, and present point cloud data to allow the user to measure the studio geometry, the arrangement of equipment, or the layout of passages.

Furthermore, the three-dimensional data to be presented may be switched among different resolutions.

The terminal may render a three-dimensional model and present it by switching among point cloud data items with different resolutions, mesh data items with different resolutions, and the three-dimensional model. For example, the terminal may present low-resolution mesh data to show three-dimensional data viewed from a distant viewpoint, and switch to presenting high-resolution mesh data when the viewpoint becomes closer. This can improve the precision of three-dimensional data display.

In analyzing an athlete's movements in a sport, the terminal may present mesh data until a specific movement or site is identified. Upon identification of the specific movement or site, the terminal may switch to presenting point cloud data of the corresponding area, which may then be used for three-dimensional shape measurement.

The terminal may switch the presentation of a three-dimensional model among different resolutions in cases such as a video game. For example, the terminal may use high-resolution three-dimensional data to present three-dimensional data of important parts, and use low-resolution three-dimensional data to present three-dimensional data of non-important parts. This can improve the overall processing performance. It should be noted that whether a three-dimensional model is important is determined based on, for example, whether the model is related to operations in the video game (e.g., players, targets, and guns are important in a shooting game) or whether the model is related to the player's selection (e.g., merchandise information is important in a shopping scene). It should also be noted that the importance of each three-dimensional model may be preset for each video game.

In presenting topographic data as a three-dimensional model, the terminal may switch among topographic data items with different resolutions. This allows more detailed topographic information to be displayed as needed.

In a further example, the terminal may display thumbnails on the Web by presenting low-resolution three-dimensional data. Upon selection of a thumbnail, an application may use corresponding high-resolution three-dimensional data for measurement or viewing. It should be noted that, if three-dimensional data is displayed on, for example, a device capable of two-dimensional display, the data is presented as two-dimensional data representing a three-dimensional object (a subject) viewed from a specific viewpoint along a specific direction. In other words, three-dimensional data may include camera information indicating a specific viewpoint and a specific direction, and two-dimensional data representing a three-dimensional object viewed from the specific viewpoint along the specific direction.

The terminal may initially prioritize displaying over measurement and present lightweight mesh data, and when measurement is required, replace the mesh data with point cloud data suitable for measurement. This allows implementation of a lightweight application.

Next, the configuration of server 1070 and terminal 1090 will be described. FIG. 13 is a block diagram illustrating an example of the functional configuration of a server and a terminal.

Server 1070 includes data generator 1071, synchronizer 1075, point cloud encoder 1076, mesh encoder 1077, model encoder 1078, multiplexer 1079, and data extractor 1080.

Data generator 1071 generates three-dimensional data based on at least one of two-dimensional data or three-dimensional data. The three-dimensional data generated includes at least two of point cloud data, mesh data, or three-dimensional model data. Data generator 1071 includes point cloud generator 1072, mesh generator 1073, and model generator 1074. It is sufficient that data generator 1071 includes at least two of point cloud generator 1072, mesh generator 1073, or model generator 1074. Point cloud generator 1072 generates point cloud data based on at least one of two-dimensional data or three-dimensional data. Mesh generator 1073 generates mesh data based on at least one of two-dimensional data or three-dimensional data. Model generator 1074 generates three-dimensional model data by machine learning based on at least one of two-dimensional data or three-dimensional data.

The two-dimensional data input to data generator 1071 may be two-dimensional images obtained by a camera. The three-dimensional data input to data generator 1071 may be point cloud data obtained by, for example, a sensor, such as a LiDAR sensor, in space such as a construction site, a factory, or an office. For each point in the point cloud data of the three-dimensional data, data generator 1071 may generate attribute information, including color information corresponding to the point, using the two-dimensional images of the two-dimensional data. The three-dimensional data generated by data generator 1071 may be divided into data items corresponding to certain spaces. The point cloud data, the mesh data, and the three-dimensional model data may each be divided into data items corresponding to certain spaces.

Synchronizer 1075 synchronizes the spatial positions or the times (such as the playback times, decoding times, and obtainment times) of the point cloud data, the mesh data, and the three-dimensional model data generated by data generator 1071. The times of each data may include the playback time, decoding time, and obtainment time. It should be noted that, instead of synchronizing the point cloud data, the mesh data, and the three-dimensional model data, synchronizer 1075 may generate synchronization information for synchronizing these data items. It should also be noted that synchronizer 1075 may perform processing of synchronizing or generating synchronization information (a synchronization signal) for at least two types of three-dimensional data, i.e., at least two of the point cloud data, the mesh data, and the three-dimensional model data, generated by data generator 1071. Synchronizer 1075 thus does not necessarily need to perform the processing for synchronization (synchronization processing) for all the three types of three-dimensional data.

Point cloud encoder 1076 encodes the point cloud data subjected to the synchronization processing by synchronizer 1075. It should be noted that point cloud encoder 1076 does not necessarily need to encode the point cloud data. The point cloud data may be encoded in advance or may be encoded upon request from terminal 1090.

Mesh encoder 1077 encodes the mesh data subjected to the synchronization processing by synchronizer 1075.

Model encoder 1078 encodes the three-dimensional model data subjected to the synchronization processing by synchronizer 1075.

Multiplexer 1079 multiplexes the encoded point cloud data (an encoded point cloud), the encoded mesh data (an encoded mesh), the encoded three-dimensional model data, and the synchronization information, using a predetermined format or a predetermined multiplexing method. It should be noted that the multiplexing by multiplexer 1079 does not necessarily need to be performed. If the multiplexing is not performed, server 1070 need not include multiplexer 1079.

Data extractor 1080 extracts a portion of the multiplexed three-dimensional data corresponding to a request from terminal 1090 and transmits the extracted portion of the three-dimensional data to terminal 1090. It should be noted that the data extraction by data extractor 1080 does not necessarily need to be performed. If the data extraction is not performed, server 1070 need not include data extractor 1080. If the data extraction by data extractor 1080 is not performed, server 1070 may transmit the three-dimensional data multiplexed by multiplexer 1079 to terminal 1090. Furthermore, if the multiplexing by multiplexer 1079 is also not performed, server 1070 may transmit the encoded point cloud data (encoded point cloud), the encoded mesh data (encoded mesh), the encoded three-dimensional model data (encoded three-dimensional model), and the synchronization information to terminal 1090, or may transmit a bitstream that includes the encoded point cloud data (encoded point cloud), the encoded mesh data (encoded mesh), the encoded three-dimensional model data (encoded three-dimensional model), and the synchronization information to terminal 1090.

Terminal 1090 includes controller 1091, decoder 1092, and presenter 1093.

Controller 1091 transmits, to server 1070, a request for a portion of the three-dimensional data to be presented. Controller 1091 may identify the portion of the three-dimensional data based on a user operation received.

Decoder 1092 decodes the portion of the three-dimensional data based on a bitstream (encoded data) obtained from server 1070.

Presenter 1093 renders and presents the decoded portion of the three-dimensional data.

Data generator 1071 in FIG. 13 may be implemented by data generator 1110 illustrated in FIG. 14. FIG. 14 is a block diagram illustrating another example of a data generator of a server.

Data generator 1110 includes point cloud generator 1111, mesh generator 1112, and model generator 1113.

Point cloud generator 1111 has the same functions as point cloud generator 1072. Point cloud generator 1111 obtains point cloud data obtained by point cloud sensor 1101 and two-dimensional images obtained by camera 1102, and generates point cloud data based on the obtained point cloud data and two-dimensional images. The point cloud data generated by point cloud generator 1111 includes geometry information of each point, as well as attribute information (such as color information) extracted from the two-dimensional images and corresponding to each point indicated by the geometry information.

Mesh generator 1112 generates mesh data based on the point cloud data generated by point cloud generator 1111.

Model generator 1113 has the same functions as model generator 1074. Model generator 1113 obtains point cloud data obtained by point cloud sensor 1101 and two-dimensional images obtained by camera 1102, and generates three-dimensional model data through machine learning based on the point cloud data and the two-dimensional images.

Point cloud data, mesh data, and three-dimensional model data may each be data that is independently generated as described in FIG. 13. Mesh data may be generated from point cloud data as described in FIG. 14. It should be noted that point cloud data may be generated from mesh data.

A mesh may be generated from a point cloud; a point cloud may be generated from a mesh.

It should be noted that point cloud data, mesh data, and three-dimensional model data may be generated by server 1070, or may be generated by a sensor or by terminal 1090 equipped with a sensor. The sensor is, for example, point cloud sensor 1101 and camera 1102.

Next, processing for synchronizing coordinate systems of a plurality of three-dimensional data will be described. FIG. 15 and FIG. 16 are diagrams for describing synchronization processing of coordinate systems.

Different three-dimensional data items corresponding to the same space may have different origin positions (origin coordinates) deviating from the actual origin coordinates. This is due to differences between their underlying systems or the local coordinate systems used by the systems.

For example, if mesh data is generated from point cloud data, the mesh data and the point cloud data have the same origin position. However, if mesh data and point cloud data are generated by different systems, the mesh data and the point cloud data may have different origin positions.

In the examples shown in FIGS. 15 and 16, the origin coordinates in the coordinate system of mesh data and the origin coordinates in the coordinate system of point cloud data are, for example, both (x1, y1, z1) in world coordinates. The mesh data and the point cloud data are thus in the same coordinate system. It should be noted that, if these origin coordinate sets are different, they may be corrected to be the same.

Now, synchronization of divided three-dimensional space information will be described.

FIG. 15 shows a case where three-dimensional spatial regions for dividing mesh data are the same as three-dimensional spatial regions for dividing point cloud data. Specifically, the three-dimensional spatial regions in the mesh data coordinate system and the three-dimensional spatial regions in the point cloud coordinate system are the same in number, size, and position.

With reference to the three-dimensional spatial regions indicated by thick dashed lines, the bounding boxes representing the three-dimensional spaces have their origins at the same position (marked by black triangles) and their maximum value points at the same position (marked by black squares) in the mesh data coordinate system and the point cloud data coordinate system.

Here, the height, width, and depth sizes of the bounding boxes are also the same in the mesh data coordinate system and the point cloud data coordinate system.

It should be noted that, as shown in FIG. 16, the three-dimensional spatial regions in the mesh data coordinate system and the three-dimensional spatial regions in the point cloud coordinate system do not necessarily need to be completely the same in number, size, and position. The three-dimensional spatial regions in the mesh data coordinate system may be larger divided regions, whereas the three-dimensional spatial regions in the point cloud data coordinate system may be subdivisions of the three-dimensional spatial regions in the mesh data coordinate system. In this example, a unit of multiple three-dimensional spatial regions in the point cloud data coordinate system corresponds to a single three-dimensional spatial region in the mesh data coordinate system.

Next, the relationship between the three-dimensional space and the encoded data will be described. FIG. 17 is a diagram for describing the relationship between a three-dimensional space and encoded data.

As described above, three-dimensional data includes, for example, any of point cloud data, mesh data, and a three-dimensional model.

As shown in FIG. 17, three-dimensional data may be divided into three three-dimensional data items for three three-dimensional spaces (tiles or spaces). The encoding device encodes each of the three three-dimensional data items resulting from dividing, and transforms the encoded data into a data unit by adding a header. The header signals (includes) the identifier (Space_ID) of the space to which the encoded data of the data unit belongs, and the identifier (DataUnit_ID) of the data unit.

The data unit is further transformed into an encoding scheme unit by adding a header that includes the identifier of the data unit or information on the data unit length.

Next, syntax of an encoding scheme unit will be described. FIG. 18 is a diagram illustrating an example of syntax of an encoding scheme unit. FIG. 19 is a diagram illustrating an example of syntax of an encoded point cloud. FIG. 20 is a diagram illustrating an example of syntax of an encoded mesh. FIG. 21 is a diagram illustrating an example of syntax of an encoded three-dimensional model.

"unit_type" indicates the type of the data unit stored in the encoding scheme unit. This specifies the type of the data unit stored in the encoding scheme unit.

"length" indicates the length of the data unit.

"data()" indicates the body of the data unit.

In FIG. 19, "unit_type" of 0 indicates that the data unit is geometry information (geometry) of the encoded point cloud. "unit_type" of 1 indicates that the data unit is attribute information of the encoded point cloud. "unit_type" of 2 indicates that the data unit is metadata of the encoded point cloud.

In FIG. 20, "unit_type" of 0 indicates that the data unit is geometry information (geometry) of the encoded mesh. "unit_type" of 1 indicates that the data unit is attribute information of the encoded mesh. "unit_type" of 2 indicates that the data unit is metadata of the encoded mesh.

In FIG. 21, "unit_type" of 0 indicates that the data unit is element 1 of the encoded three-dimensional model. "unit_type" of 1 indicates that the data unit is element 2 of the encoded three-dimensional model. "unit_type" of 2 indicates that the data unit is metadata of the encoded three-dimensional model.

It should be noted that the syntax is not limited to the exemplary syntax configurations described above and shown in FIGS. 19 to 21. The syntax may use only some of the syntax elements, may include types (categories) not described above, or may have syntax elements reordered. For example, the syntax of an encoding scheme unit may have a structure common to multiple encoding schemes as in FIG. 18 and also indicate unit_type, length, and data() shown in FIGS. 19 to 21.

It should be noted that an encoding scheme unit may be provided with a further header indicating the type of the encoding scheme unit. Exemplary encoding scheme unit types include "point_cloud_codec_unit" indicating point cloud data, "mesh_codec_unit" indicating mesh data, and "model_codec_unit" indicating three-dimensional model data. This allows integrated handling of multiple encoding schemes.

FIG. 22 is a diagram illustrating an example of syntax of three-dimensional data information.

Syntax for storing multiple encoding schemes in a single format may indicate the number of three-dimensional data items (number_of_3Dformat) included in the format and the types of the three-dimensional data items (format_type), and may store data of each format. This allows integrated handling of multiple encoding schemes or three-dimensional data items, as well as identification of multiple encoding schemes or three-dimensional data items.

"3Ddata_info" indicates information on the format structure that stores multiple three-dimensional data items.

"number_of_3Dformat" indicates the number of three-dimensional formats used.

"format_type" indicates the types of the formats of the stored three-dimensional data. For example, the values of "format_type" and the formats corresponding to the values may be defined as follows. "format_type" of 0 indicates that the format of the stored three-dimensional data is point cloud data (point cloud). "format_type" of 1 indicates that the format of the stored three-dimensional data is mesh data (mesh). "format_type" of 2 indicates that the format of the stored three-dimensional data is G-PCC data (g-pcc). "format_type" of 3 indicates that the format of the stored three-dimensional data is V-DMC data (v-dmc). "format_type" of 4 indicates that the format of the stored three-dimensional data is three-dimensional model data (3Dmodel).

Next, the data structure of encoded data of a plurality of three-dimensional data will be described for each type of three-dimensional data. FIG. 23 is a diagram for describing the data structure of an encoded point cloud. FIG. 24 is a diagram for describing the data structure of an encoded mesh. FIG. 25 is a diagram for describing the data structure of an encoded three-dimensional model.

The encoding device divides each type of three-dimensional data into three-dimensional data items for the respective spatial regions, and encodes each of the three-dimensional data items resulting from dividing (i.e., divided three-dimensional data items) to generate an encoded data item.

Each encoded data item is provided with a header that stores at least one of "data_unit_id" and "space_id."

Here, "data_unit_id" is an identifier identifying the data unit within the encoded data and is unique within the encoded data. Furthermore, "space_id" indicates identification information of the spatial region. If "data_unit_id" or "space_id" is common among multiple types of three-dimensional data, the same values are indicated for the multiple types of three-dimensional data.

In the examples shown in FIGS. 23 to 25, space_id = 1 is assigned to all of the following data units: the data unit with data_unit_id = 0 in the encoded point cloud, the data unit with data_unit_id = 3 in the encoded mesh, and the data unit with data_unit_id = 0 in the encoded three-dimensional model. This means that these three-dimensional data units belong to the same three-dimensional space indicated by Space_ID #1.

The data, such as data and a header, may be included in a bitstream structure such as a data unit or an encoding scheme unit, or may be stored in a predetermined file format such as some type of box in ISOBMFF.

Next, three-dimensional space information will be described. FIG. 26 is a diagram two-dimensionally illustrating an example of a plurality of three-dimensional spaces. FIG. 27 is a diagram illustrating an example of a bounding box. FIG. 28 is a diagram illustrating an example of syntax of three-dimensional space information.

In the syntax of the three-dimensional spatial information, "3Dspace_info" is information indicating divided three-dimensional spaces. "3Dspace_info" can be used for partial decoding.

"number_of_space" indicates the number of divided three-dimensional spaces.

"space_id" indicates the identifier of each divided three-dimensional space.

The three-dimensional spatial information includes bounding box information, which is information for defining each bounding box as illustrated in FIG. 27.

The bounding box information includes "bounding_box_xyz" and "bounding_box_whd."

"bounding_box_xyz" indicates the coordinates of the reference point of the bounding box. In the example in FIG. 27, the coordinates are represented by the x, y, and z coordinate values (x0, y0, z0), for example.

"bounding_box_whd" indicates the size of the bounding box. In the example in FIG. 27, the size is represented by the width w, height h, and depth d (w0, h0, d0), for example.

In addition, the three-dimensional spatial information may include the identifiers of the data units of the respective encoded data types. It should be noted that the three-dimensional spatial information does not necessarily need to include these identifiers. That is, these identifiers do not necessarily need to be signaled.

"pointcloud_id" indicates the identifier of the data unit of the encoded point cloud for the space corresponding to "space_id."

"mesh_id" indicates the identifier of the data unit of the encoded mesh for the space corresponding to "space_id."

"model_id" indicates the identifier of the data unit of the encoded three-dimensional model for the space corresponding to "space_id."

It should be noted that the data units may have "data_unit_id" indicated but no "space_id" indicated. In that case, information on each space in the three-dimensional spatial information may store the identifiers of the data units of the respective encoded data types. In this manner, the three-dimensional spatial information may be associated with the divided three-dimensional encoded data items.

Furthermore, if the data units have "space_id" indicated, "space_id" may associate the three-dimensional spatial information with the identifiers of the data units of the respective encoded data types. In that case, the identifiers of the data units of the respective encoded data types need not be stored.

The three-dimensional spatial information may be standardized so that point cloud data and mesh data comply with a standard dividing method, a standard origin of each divided space, and a standard bounding box size. Alternatively, the three-dimensional spatial information may be set identically for both point cloud data and mesh data. Thus, the three-dimensional spatial information may be standardized or identical between different types of three-dimensional data. Standardizing the three-dimensional spatial information facilitates switching (e.g., switching the presentation or transmission) to a different type of three-dimensional data. In addition, in a format capable of integrated handling of multiple types of three-dimensional data, this eliminates the need to provide three-dimensional spatial information for each type of three-dimensional data. Rather, the same three-dimensional spatial information can be used for all the types of three-dimensional data, reducing the data amount of the three-dimensional spatial information.

It should be noted that, in addition to the three-dimensional spatial information of point cloud data and mesh data, the three-dimensional spatial information of a three-dimensional model may similarly be synchronized or standardized with the three-dimensional spatial information of other types of three-dimensional data.

Next, the relationship between the data structure of three-dimensional data and partial decoding will be described. FIG. 29 is a flowchart illustrating an example of partial decoding. FIG. 30 is a diagram illustrating an example of a three-dimensional spatial region that is to be the target of partial decoding. FIG. 31 is a diagram illustrating an example of the data structure of an encoded point cloud that is to undergo partial decoding. FIG. 32 is a diagram illustrating an example of the data structure of an encoded mesh that is to undergo partial decoding. FIG. 33 is a diagram illustrating an example of the data structure of an encoded three-dimensional model that is to undergo partial decoding.

In partial decoding, first, the decoding device determines a three-dimensional spatial region that is to be the target of partial decoding (S1001).

Next, the decoding device refers to three-dimensional spatial information (3Dspace_info) to identify a region that overlaps the target three-dimensional spatial region from bounding box information of three-dimensional spatial regions, and obtains space_id of the identified region (S1002).

Next, the decoding device obtains, from encoded data, data units having space_id obtained, and decodes the data units (S1003). Thus, the decoding device performs partial decoding for decoding a portion of three-dimensional data. In partial decoding, the decoding device decodes only a portion of three-dimensional data rather than the entire three-dimensional data.

For example, as shown in FIG. 30, the target three-dimensional spatial region for partial decoding may be the region indicated by thick lines. Then, space_id of the three-dimensional space to be obtained is determined to be #2 from the three-dimensional space information.

Then, as shown in FIGS. 31 to 33, data units corresponding to Space_id = #2 in the encoded data of multiple types of three-dimensional data are obtained and decoded.

It should be noted that, instead of space_id, the decoding device may obtain data unit IDs from the three-dimensional spatial information, and obtain data units having the obtained data unit IDs to perform partial decoding.

Next, a case where there is no spatial synchronization will be described. FIG. 34 is a diagram illustrating an example of coordinate systems of different types of three-dimensional data that are not spatially synchronized. FIG. 35 is a diagram illustrating an example of syntax of three-dimensional data information. FIG. 36 is a diagram illustrating an example of syntax of three-dimensional space information.

As shown in FIG. 34, data items for the same space may have different origin coordinates due to different coordinate systems. The encoding device may align the origin coordinates by calculating the relative values between the coordinates (x1-x2, y1-y2, z1-z2) and correcting the coordinates. The encoding device may provide the notification of (transmit) the calculated relative values between the coordinates to the decoding device (terminal) as synchronization information.

The synchronization information may be represented as the relative position (of the origin) of point cloud data to the position (of the origin) of mesh data, or as the relative position of mesh data to the position of point cloud data.

The above also applies to three-dimensional model data. Thus, the synchronization information may be represented as the relative position (of the origin) of one type of three-dimensional data to the position (of the origin) of another type of three-dimensional data. It should be noted that, for three or more types of three-dimensional data, their relative positions are calculated with reference to the position of any one type of three-dimensional data.

Three-dimensional data information may include "space_sync_information" indicating synchronization information as shown in FIG. 35. "space_sync_information" indicates three-dimensional space synchronization information, indicating, for example, the amount of three-dimensional space misalignment (the differences, i.e., the relative values, between the reference coordinates and the current coordinates).

The three-dimensional data information may store synchronization information (space_sync_information) for each of multiple format information items. In that case, a data format serving as the synchronization reference may be located at the beginning of a loop, and the second and subsequent iterations of the loop may store synchronization information (relative position information) relative to the format located at the beginning.

Alternatively, the three-dimensional spatial information may include "space_sync_information" indicating synchronization information as shown in FIG. 36. For three-dimensional spaces at differently misaligned spatial positions, loop iterations for the respective three-dimensional spaces may store synchronization information.

FIG. 37 is a diagram illustrating an example of the functional configuration of the terminal.

Terminal 1120 includes decoder 1121 and synchronizing presenter 1122.

Decoder 1121 decodes synchronization information, based on three-dimensional data information or three-dimensional space information. Synchronizing presenter 1122 performs position alignment of three-dimensional data based on the synchronization information, and presents the three-dimensional data after position alignment.

Next, spatial synchronization will be described. FIG. 38 is a flowchart illustrating an example of spatial synchronization processing.

First, a system that includes the encoding device (server) and the decoding device (terminal) determines whether spatial synchronization is necessary between point cloud data and mesh data (S1011).

If the system determines that spatial synchronization is necessary (S1011: Yes), the system performs step S1012. If the system determines that spatial synchronization is unnecessary (S1011: No), the system performs step S1013.

At step S1012, the system determines whether the point cloud data and the mesh data are spatially synchronized (S1012).

If the system determines that the data items are spatially synchronized (S1012: Yes), the system performs step S1014. If the system determines that the data items are not spatially synchronized (S1012: No), the system performs step S1015.

At step S1013, the system presents the point cloud data and the mesh data without performing spatial synchronization (S1013).

At step S1014, the system presents the point cloud data and the mesh data after performing spatial synchronization based on synchronization information (S1014).

At step S1015, the system simply presents the point cloud data and the mesh data (S1015).

It should be noted that the processing at steps S1011 to S1012 may be performed by the encoding device or the decoding device. The processing at steps S1013 to S1015 may be performed by the decoding device.

It should be noted that, although the above flowchart illustrates spatial synchronization processing between point cloud data and mesh data, the processing may also apply to three-dimensional model data. Spatial synchronization processing may be performed between any different types of three-dimensional data without limitation on data types.

Whether spatial synchronization is necessary may depend on an application or use. For example, if the three-dimensional data is to be used for measurement, which requires accurate positions, spatial synchronization may be determined to be necessary.

Alternatively, if the three-dimensional data is to be displayed for providing an overview to the user, spatial synchronization may be determined to be unnecessary because such presentation is not expected to require accurate position alignment.

It should be noted that the level of position alignment may be specified. In that case, the system (the encoding device or the decoding device) may adjust the accuracy of synchronization based on the level of position alignment.

### (Others)

The above embodiment has described an example of spatial synchronization of multiple three-dimensional data items. In addition to that, time synchronization may be performed to synchronize the presentation times, decoding times, or acquisition times. At least one of spatial synchronization and time synchronization may be performed.

Furthermore, for seamless switching of color representation presented upon switching of the three-dimensional data, parameters such as color matrix, color bit depth, and HDR may be set identically for different three-dimensional data items. Thus, attribute information of multiple three-dimensional data items may be synchronized.

The above embodiment has described an example of switching between different types of three-dimensional data, such as point cloud data and mesh data. However, the three-dimensional data items for switching are not limited to different types of three-dimensional data. For example, the three-dimensional data items may be three-dimensional data items with different resolutions, point cloud data items with different numbers of points, or mesh data items with different numbers of points or faces. Furthermore, the three-dimensional data may be switched among three or more three-dimensional data items.

Furthermore, the three-dimensional data may be switched among point cloud data items with different obtainment times. For example, at a construction site, the three-dimensional data items for switching may include point cloud data before construction, point cloud data after construction, point cloud data 10 years later, and modeled mesh data.

In addition to three-dimensional data, three-dimensional model data such as NeRF data may be used. Three-dimensional model data is a model for presenting three-dimensional data, and may be encoded or unencoded. The data may be switched among three-dimensional model data items for the same space, or among distinct three-dimensional model data items. In these cases, the above-described spatial synchronization method may be used. Furthermore, the identifiers of three-dimensional model data items may be added to a data format capable of integrated handling of point cloud data and mesh data. This allows integrated handling of three-dimensional data and three-dimensional model data. Furthermore, spatial information (such as the origin, bounding box, and dividing method) may be set identically for three-dimensional data and three-dimensional model data. This can standardize information on three-dimensional spatial regions to facilitate partial decoding.

Furthermore, the three-dimensional data to be processed (the three-dimensional data to be presented or transmitted) may be switched in the following order: mesh data with a resolution lower than a first resolution, mesh data with a resolution higher than or equal to the first resolution, point cloud data with a resolution lower than a second resolution, and point cloud data with a resolution higher than or equal to the second resolution.

Furthermore, regarding the timing of data transmission or encoding, the server may accumulate data for three-dimensional models encoded in advance and, in response to a request from the terminal, extract three-dimensional data corresponding to the request. The server may also encode, upon receiving a request from the terminal, three-dimensional data corresponding to the request. The terminal may request and download three-dimensional data to be processed from the server in advance. This can reduce the time required for presentation by the terminal.

Furthermore, it may be possible to select, for each divided three-dimensional data item, whether to present point cloud data, mesh data, or three-dimensional model data, or to present two or more of these types of three-dimensional data superimposed. For example, the terminal may present a mesh for a divided data item corresponding to an avatar's trunk, and present a point cloud for a divided data item corresponding to the avatar's face. This allows more precise presentation.

The above embodiment has illustrated point cloud data, mesh data, and three-dimensional model data as three-dimensional data representing a three-dimensional object. However, the three-dimensional data is not limited to such data. For example, the three-dimensional object may be represented by multiple sets, each including: line of sight information indicating a line of sight; and a two-dimensional image of the three-dimensional object viewed from the line of sight. That is, data including such sets may be regarded as a type of three-dimensional data. Furthermore, three-dimensional data in other formats may be used, such as Gaussian splatting data.

FIG. 39 is a diagram illustrating an example of the configuration of a decoding device. FIG. 40 is a flowchart illustrating an example of a decoding method performed by the decoding device.

Decoding device 1130 includes circuitry 1131 and memory 1132 coupled to circuitry 1131.

Circuitry 1131 performs the processes described below.

Circuitry 1131 performs obtaining encoded data that includes (i) encoding scheme information (format) indicating one of encoding schemes that include first data representing a three-dimensional object and second data representing the three-dimensional object and (ii) identification information indicating a three-dimensional space including the three-dimensional object (S1021). Next, circuitry 1131 performs decoding, based on the encoded data, the first data and the second data that correspond to the three-dimensional space (S1022). Next, circuitry 1131 performs generating first presentation data for presentation, by rendering the first data (S1023). Next, circuitry 1131 performs generating second presentation data for presentation, by rendering the second data (S1024). Next, circuitry 1131 performs presenting including switching from a presentation of the second presentation data generated to a presentation of the first presentation data (S1025). It should be noted that the first presentation data and the second presentation data are two-dimensional data or three-dimensional data generated by rendering reconstructor 1034.

Accordingly, first presentation data and second presentation data are generated based on first data and second data that correspond to the three-dimensional space, and presenting including switching from a presentation of the second presentation data to a presentation of the first presentation data is performed, and thus, in the switching between two data representing the three-dimensional object, the switching and presenting can be performed without causing spatial deviation. Therefore, the first presentation data and the second presentation data can be appropriately presented.

For example, the first data is point cloud data representing the three-dimensional object.

For this reason, presenting including switching from the presentation of the second presentation data to the presentation of the first presentation data that is based on point cloud data is performed, and thus, in the switching between the two data representing the three-dimensional object, the two data can be switched and presented without causing spatial deviation.

For example, the second data is mesh data representing the three-dimensional object.

For this reason, presenting including switching from the presentation of the second presentation data that is based on the mesh data to the presentation of the first presentation data is performed, and thus, in the switching between the two data representing the three-dimensional object, the two data can be switched and presented without causing spatial deviation.

For example, the second data is three-dimensional model data representing the three-dimensional object. The three-dimensional model data indicates a machine learning model obtainable through machine learning of sets of (i) lines of sight and (ii) two-dimensional images.

For this reason, presenting including switching from the presentation of the second presentation data that is based on the three-dimensional model data to the presentation of the first presentation data is performed, and thus, in the switching between the two data representing the three-dimensional object, the two data can be switched and presented without causing spatial deviation.

For example, the second data is a two-dimensional image of the three-dimensional object when viewed from a predetermined line-of-sight direction.

For this reason, presenting including switching from the presentation of the second presentation data that is based on the two-dimensional image to the presentation of the first presentation data is performed, and thus, in the switching between the two data representing the three-dimensional object, the two data can be switched and presented without causing spatial deviation.

For example, the circuitry further performs: obtaining, from a user, a switching request for switching presentation data. In the presenting, the circuitry performs the presenting including the switching from the presentation of the second presentation data to the presentation of the first presentation data, according to the switching request.

For this reason, switching can be performed at the timing specified by the user.

For example, the circuitry further performs: receiving, from a user, an operation for changing a mode of presentation. In the presenting, the circuitry changes the mode of presentation according to the operation, and performs the presenting including the switching from the presentation of the second presentation data to the presentation of the first presentation data, according to the change.

For this reason, switching can be performed at a timing that is in accordance with the operation by the user.

For example, in the obtaining, the circuitry obtains the encoded data from an encoding device via a communication network. In the presenting, the circuitry performs the presenting including the switching from the presentation of the second presentation data to the presentation of the first presentation data, according to a bandwidth of the communication network.

For this reason, switching can be performed according to the bandwidth of the communication network, and thus, the presenting including switching from a presentation of the second presentation data generated to a presentation of the first presentation data can be performed when the bandwidth of the communication network changes from being lower than a predetermined bandwidth to being higher than or equal to the predetermined band, for example.

For example, in the presenting, the circuitry performs the presenting including the switching from the presentation of the second presentation data to the presentation of the first presentation data, according to an available capacity of the circuitry.

For this reason, switching can be performed according to the available capacity of the circuitry, and thus, the presenting including switching from a presentation of the second presentation data generated to a presentation of the first presentation data can be performed when the available capacity of the circuitry changes from being lower than a predetermined capacity to being higher than or equal to the predetermined capacity, for example.

For example, the encoded data includes synchronization information for synchronizing a coordinate system of the first data and a coordinate system of the second data. In the presenting, the circuitry presents the first presentation data and the second presentation data, based on the synchronization information.

For this reason, the switching from the presentation of the second presentation data to the presentation of the first presentation data can be performed after synchronizing the coordinate systems of the first presentation data and the second presentation data. For this reason, in the switching between the two data representing the three-dimensional object, the two data can be switched and presented without causing spatial deviation.

For example, the circuitry further performs: determining whether a coordinate system of the first data and a coordinate system of the second data are to be synchronized. In the presenting, the circuitry presents the first presentation data and the second presentation data, based on the synchronization information, when the circuitry determines that the coordinate system of the first data and the coordinate system of the second data are to be synchronized.

For this reason, synchronization processing can be performed when required, and synchronization processing can be skipped when not required. Therefore, there is a possibility that the processing load can be reduced.

For example, each of the first data and the second data has a configuration that is common between the first data and the second data.

For this reason, the data amount of encoded data can be reduced. Therefore, communication capacity can be reduced.

For example, the encoded data includes space information for identifying the three-dimensional space in which the three-dimensional object is included. The circuitry further performs: obtaining a target region indicating one region of the three-dimensional space; and identifying, based on the space information, first overlapping data that is part of the first data and overlaps the target region. In the decoding, the circuitry decodes the first overlapping data identified.

For this reason, the volume of data to be obtained can be reduced by obtaining only the first overlapping data, for example. Therefore, communication capacity can be reduced. Furthermore, for example, it is possible to decode only the first overlapping data. Therefore, the processing load can be reduced.

Furthermore, circuitry 1131 may operate like the decoding method illustrated in the flowchart in FIG. 41. FIG. 41 is a flowchart illustrating another example of a decoding method performed by the decoding device.

Circuitry 1131 performs decoding encoding scheme information indicating a second encoding scheme that represents the three-dimensional object and is different from a first encoding scheme of the first data (S1031). Circuitry 1131 performs decoding second data of the second encoding scheme indicated by the encoding scheme information (S1032). The second data is to be used for generating second presentation data for presentation.

Accordingly, since second data of a second encoding scheme indicated by the encoding scheme information obtained by decoding is decoded, it is possible to obtain second data for generating the appropriate second presentation data for presentation.

FIG. 42 is a diagram illustrating an example of the configuration of an encoding device. FIG. 43 is a flowchart illustrating an example of an encoding method performed by the encoding device.

Encoding device 1140 includes circuitry 1141 and memory 1142 coupled to circuitry 1141.

Circuitry 1141 performs the processes described below.

Circuitry 1141 performs generating encoding scheme information indicating a second encoding scheme that represents the three-dimensional object and is different from a first encoding scheme of the first data (S1041). Circuitry 1141 performs generating second data of the second encoding scheme indicating the encoding scheme information (S1042). Circuitry 1141 performs generating a bitstream including the encoding scheme information and the second data (S1043). The second data is to be used in generating second presentation data for presentation.

Accordingly, since a bitstream including encoding scheme information and second data is generated, a decoding device that obtains the bitstream can obtain second data for generating the appropriate second presentation data for presentation.

A three-dimensional data encoding device, a three-dimensional data decoding device, and the like, according to embodiments of the present disclosure have been described above, but the present disclosure is not limited to these embodiments.

It should be noted that each of the processing units included in the encoding device, the decoding device, the server, the terminal, and the like, according to the above embodiments is typically implemented as a large-scale integrated (LSI) circuit, which is an integrated circuit (IC). These may take the form of individual chips, or may be partially or entirely packaged into a single chip.

Such IC is not limited to an LSI, and thus may be implemented as a dedicated circuit or a general-purpose processor. Alternatively, a field programmable gate array (FPGA) that allows for programming after the manufacture of an LSI, or a reconfigurable processor that allows for reconfiguration of the connection and the setting of circuit cells inside an LSI may be employed.

Moreover, in the above embodiments, the structural components may be implemented as dedicated hardware or may be realized by executing a software program suited to such structural components. Alternatively, the structural components may be implemented by a program executor such as a CPU or a processor reading out and executing the software program recorded in a recording medium such as a hard disk or a semiconductor memory.

Furthermore, the present disclosure may be implemented as a decoding method, and the like, that is executed by the decoding device, and the like.

Also, the divisions of the functional blocks shown in the block diagrams are mere examples, and thus a plurality of functional blocks may be implemented as a single functional block, or a single functional block may be divided into a plurality of functional blocks, or one or more functions may be moved to another functional block. Also, the functions of a plurality of functional blocks having similar functions may be processed by single hardware or software in a parallelized or time-divided manner.

Also, the processing order of executing the steps shown in the flowcharts is a mere illustration for specifically describing the present disclosure, and thus may be an order other than the shown order. Also, one or more of the steps may be executed simultaneously (in parallel) with another step.

An encoding device, a decoding device, and the like, according to one or more aspects have been described above based on the embodiments, but the present disclosure is not limited to these embodiments. The one or more aspects may thus include forms achieved by making various modifications to the above embodiments that can be conceived by those skilled in the art, as well forms achieved by combining structural components in different embodiments, without materially departing from the spirit of the present disclosure.

### [Industrial Applicability]

The present disclosure is applicable to a decoding device and a decoding method.

### [Reference Signs List]

- 1001: three-dimensional data encoding system
- 1002: three-dimensional data decoding system
- 1003: sensor terminal
- 1004: external connector
- 1011: three-dimensional data generation system
- 1012: presenter
- 1013: encoder
- 1014: multiplexer
- 1015: input/output unit
- 1016: controller
- 1017: sensor information obtainer
- 1018: three-dimensional data generator
- 1021: sensor information obtainer
- 1022: input/output unit
- 1023: demultiplexer
- 1024: decoder
- 1025: presenter
- 1026: user interface
- 1027: controller
- 1031: three-dimensional model learner
- 1032: three-dimensional model encoder
- 1033: three-dimensional model decoder
- 1034: rendering reconstructor
- 1041: data divider
- 1042: encoder
- 1051: decoder
- 1052: data merger
- 1061: terminal presentation screen
- 1061a: point cloud button
- 1061b: mesh button
- 1062: terminal presentation screen
- 1063: terminal presentation screen
- 1070: server
- 1071: data generator
- 1072: point cloud generator
- 1073: mesh generator
- 1074: model generator
- 1075: synchronizer
- 1076: point cloud encoder
- 1077: mesh encoder
- 1078: model encoder
- 1079: multiplexer
- 1080: data extractor
- 1090: terminal
- 1101: point cloud sensor
- 1102: camera
- 1110: data generator
- 1111: point cloud generator
- 1112: mesh generator
- 1113: model generator
- 1120: terminal
- 1121: decoder
- 1122: synchronizing presenter
- 1130: decoding device
- 1131: circuitry
- 1132: memory

## Claims

1. A decoding device comprising:
circuitry; and
memory coupled to the circuitry, wherein
the circuitry, in operation, performs:
obtaining encoded data that includes (i) encoding scheme information indicating one of encoding schemes that include first data representing a three-dimensional object and second data representing the three-dimensional object and (ii) identification information indicating a three-dimensional space including the three-dimensional object;
decoding, based on the encoded data, the first data and the second data that correspond to the three-dimensional space;
generating first presentation data for presentation, by rendering the first data;
generating second presentation data for presentation, by rendering the second data; and
presenting including switching from a presentation of the second presentation data generated to a presentation of the first presentation data.

2. The decoding device according to claim 1, wherein
the first data is point cloud data representing the three-dimensional object.

3. The decoding device according to claim 1, wherein
the second data is mesh data representing the three-dimensional object.

4. The decoding device according to claim 1, wherein
the second data is three-dimensional model data representing the three-dimensional object, and
the three-dimensional model data indicates a machine learning model obtainable through machine learning of sets of (i) lines of sight and (ii) two-dimensional images.

5. The decoding device according to claim 1, wherein
the second data is a two-dimensional image of the three-dimensional object when viewed from a predetermined line-of-sight direction.

6. The decoding device according to any one of claims 1 to 5, wherein
the circuitry further performs:
obtaining, from a user, a switching request for switching presentation data, and
in the presenting, the circuitry performs the presenting including the switching from the presentation of the second presentation data to the presentation of the first presentation data, according to the switching request.

7. The decoding device according to any one of claims 1 to 5, wherein
the circuitry further performs:
receiving, from a user, an operation for changing a mode of presentation, and
in the presenting, the circuitry changes the mode of presentation according to the operation, and performs the presenting including the switching from the presentation of the second presentation data to the presentation of the first presentation data, according to the change.

8. The decoding device according to any one of claims 1 to 5, wherein
in the obtaining, the circuitry obtains the encoded data from an encoding device via a communication network, and
in the presenting, the circuitry performs the presenting including the switching from the presentation of the second presentation data to the presentation of the first presentation data, according to a bandwidth of the communication network.

9. The decoding device according to any one of claims 1 to 5, wherein
in the presenting, the circuitry performs the presenting including the switching from the presentation of the second presentation data to the presentation of the first presentation data, according to an available capacity of the circuitry.

10. The decoding device according to any one of claims 1 to 5, wherein
the encoded data includes synchronization information for synchronizing a coordinate system of the first data and a coordinate system of the second data, and
in the presenting, the circuitry presents the first presentation data and the second presentation data, based on the synchronization information.

11. The decoding device according to claim 10, wherein
the circuitry further performs:
determining whether a coordinate system of the first data and a coordinate system of the second data are to be synchronized, and
in the presenting, the circuitry presents the first presentation data and the second presentation data, based on the synchronization information, when the circuitry determines that the coordinate system of the first data and the coordinate system of the second data are to be synchronized.

12. The decoding device according to any one of claims 1 to 5, wherein
each of the first data and the second data has a configuration that is common between the first data and the second data.

13. The decoding device according to any one of claims 1 to 5, wherein
the encoded data includes space information for identifying the three-dimensional space in which the three-dimensional object is included,
the circuitry further performs:
obtaining a target region indicating one region of the three-dimensional space; and
identifying, based on the space information, first overlapping data that is part of the first data and overlaps the target region, and
in the decoding, the circuitry decodes the first overlapping data identified.

14. A decoding method comprising:
obtaining encoded data that includes (i) encoding scheme information indicating one of encoding schemes that include first data representing a three-dimensional object and second data representing the three-dimensional object and (ii) identification information indicating a three-dimensional space including the three-dimensional object;
decoding, based on the encoded data, the first data and the second data;
generating first presentation data for presentation, by rendering the first data;
generating second presentation data for presentation, by rendering the second data; and
presenting including switching from a presentation of the second presentation data generated to a presentation of the first presentation data.

15. A decoding device that decodes first data representing a three-dimensional object, the decoding device comprising:
circuitry; and
memory coupled to the circuitry, wherein
the circuitry, in operation, performs:
decoding encoding scheme information indicating a second encoding scheme that represents the three-dimensional object and is different from a first encoding scheme of the first data; and
decoding second data of the second encoding scheme indicated by the encoding scheme information, and
the second data is to be used for generating second presentation data for presentation.

16. An encoding device that encodes first data representing a three-dimensional object, the encoding device comprising:
circuitry; and
memory coupled to the circuitry, wherein
the circuitry, in operation, performs:
generating encoding scheme information indicating a second encoding scheme that represents the three-dimensional object and is different from a first encoding scheme of the first data;
generating second data of the second encoding scheme indicated by the encoding scheme information; and
generating a bitstream including the encoding scheme information and the second data, and
the second data is to be used for generating second presentation data for presentation.
